(19) Europäisches Patentamt
European Patent Office
Office européen des brevets

(11) EP 4 163 109 A1

(12) **EUROPEAN PATENT APPLICATION**
published in accordance with Art. 153(4) EPC

(43) Date of publication:
**12.04.2023 Bulletin 2023/15**

(21) Application number: **21818502.3**

(22) Date of filing: **27.05.2021**

(51) International Patent Classification (IPC):
***B32B 27/30** (2006.01)* ***B32B 27/36** (2006.01)*
***C08F 212/08** (2006.01)* ***C08F 220/14** (2006.01)*
***B29C 48/08** (2019.01)* ***B29C 48/21** (2019.01)*
***B32B 7/027** (2019.01)*

(52) Cooperative Patent Classification (CPC):
**B29C 48/08; B29C 48/21; B32B 7/027; B32B 27/30; B32B 27/36; C08F 212/08; C08F 220/14**

(86) International application number:
**PCT/JP2021/020285**

(87) International publication number:
**WO 2021/246295 (09.12.2021 Gazette 2021/49)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **05.06.2020 JP 2020098417**
**02.10.2020 JP 2020167517**

(71) Applicants:
- **MITSUBISHI GAS CHEMICAL COMPANY, INC.
Chiyoda-ku
Tokyo 100-8324 (JP)**
- **MGC Filsheet Co., Ltd.
Tokorozawa-shi, Saitama 359-1164 (JP)**

(72) Inventors:
- **TOKITA Atsuhiro
Tokyo 100-8324 (JP)**
- **NONAKA Kenta
Toyonaka-shi, Osaka 561-0823 (JP)**
- **TAKASAKI Masato
Toyonaka-shi, Osaka 561-0823 (JP)**

(74) Representative: **Hoffmann Eitle
Patent- und Rechtsanwälte PartmbB
Arabellastraße 30
81925 München (DE)**

# (54) RESIN SHEET FOR MOLDING AND MOLDED ARTICLE USING SAME

(57) The present invention can provide a resin sheet for molding which comprises a substrate layer that contains polycarbonate resin (a1), a high-hardness resin layer that contains high-hardness resin and that is provided on at least one surface of the substrate layer, a hard coat layer or a hard coat antiglare layer that is provided on at least one surface of the high-hardness resin layer, and a wet antireflection layer that is laminated on a surface of the hard coat layer or the hard coat antiglare layer on the side opposite from the high-hardness resin layer, wherein the glass transition temperatures of the polycarbonate resin (a1) and the high-hardness resin satisfy the following relationship: -10°C ≤ (glass transition temperature of high-hardness resin) - (glass transition temperature of polycarbonate resin (a1)) ≤ 40°C.

EP 4 163 109 A1

## Description

TECHNICAL FIELD

The present invention relates to a resin sheet for molding and a molded article obtained by using the same.

BACKGROUND ART

For automobile interior parts such as instrument covers and component parts of display surfaces of home appliances, office automation equipments, personal computers, small portable devices and the like, glass plates, transparent resin plates, etc. are used, and for frame parts for holding these components and the like, resin molded bodies are used. Meanwhile, for component parts of touch panel type display surfaces to be used for mobile phone terminals and the like, products in which a transparent sheet, in particular, a glass plate is bonded to a frame part made of an injection-molded resin with a double-sided adhesive tape or the like are used. Regarding the touch panel type display surface, the thinner it is, the better from the viewpoint of the response speed, and a certain thickness or more is required from the viewpoint of the strength. For this reason, a material having a high elastic modulus is selected. In addition, scratch resistance, fingerprint wiping-off properties, etc. are also required.

Resin molded bodies to be used for the above-described applications can be produced by forming a resin sheet. In this regard, for imparting characteristics according to the applications, various methods have been devised. For example, in such methods, a resin sheet is modified with a hard coat layer, a decorative sheet or the like, or resin layers with different compositions are layered to constitute a resin sheet, or the composition of a resin to be used is adjusted.

As the decorative sheet, for example, an acrylic resin is used, and a sheet having a hard coat layer, a sheet in which a design such as printing is provided and a film is further bonded thereto, etc. are also used.

For example, Patent Document 1 discloses a decorative sheet in which a transparent acrylic resin sheet layer, a pattern printing ink layer, an ABS resin sheet layer and an ABS resin backer layer are layered in this order from the surface side. Patent Document 2 discloses a multilayer film in which a layer made of a methacrylic resin and acrylic rubber particles is layered on a polycarbonate resin layer, and discloses a decorative sheet in which one surface of the multilayer film is decorated and a thermoplastic resin sheet is layered on the decorated surface. The document also discloses a decorative molded article produced by injection molding a thermoplastic resin on the decorated surface.

Patent Document 3 discloses a resin molded article obtained by molding a sheet in which a thermosetting type or ultraviolet curable type hard coat layer is provided on a resin substrate.

Patent Document 4 discloses a decorative hard coat film having a layer formed by using a hard coat paint having a specific composition on one surface of a substrate film, and describes that a print layer may be provided on the substrate film. This decorative film can be thermoformed. The decorative film of Patent Document 4 is integrated with a resin for molding to produce a decorative molded article.

Patent Document 5 discloses a layered sheet having a coating layer mainly composed of an acrylic resin on one surface of a substrate layer mainly composed of a polycarbonate-based resin composition.

Further, an anti-glare layer is sometimes provided to component parts of display surfaces in order to reduce the reflection of natural light to improve visibility of the display. The anti-glare treatment is performed by imparting a fine structure or shape to the surface.

When the display surface has a curved shape, in the case of using a glass plate as a front plate part, it is necessary to bend the glass plate before applying the antiglare treatment. This is because the anti-glare layer cannot withstand the bending temperature of the glass and disappears. However, it is difficult to uniformly apply the anti-glare treatment to a curved surface. Meanwhile, in the case of using a resin plate, it is possible to bend a flat plate to which the anti-glare treatment is applied in advance. Since the bending temperature of the resin plate is significantly lower than the bending temperature of the glass and the anti-glare layer does not disappear, there is an advantage that it is not necessary to apply the anti-glare treatment to a curved surface.

In addition to the anti-glare layer, in order to improve the visibility of the display unit, it is advisable to provide an anti-reflection layer on the surface of the resin sheet or glass plate.

To form the anti-reflection layer from an inorganic substance, a method of forming a layer of a metal oxide film, for example, on the resin sheet or glass plate by a dry film forming method, such as a vapor deposition or sputtering, can be used. In the case of dry film forming, it is common to laminate TiOz, $Nb_2O_5$, $ZrO_2$, or $Ta_2O_2$ as a high refractive index layer and a material including a mixed oxide of $SiO_2$, Si and Sn, a material including a mixed oxide of Si and Zr, or a material including a mixed oxide of Si and Al as a low refractive index layer.

Normally, without the anti-reflection layer, the surface of the resin sheet reflects 4 to 6% of the external light incident on the resin sheet, and so the visibility of the display unit is reduced, but by laminating an anti-reflection layer, the amount of external light that is reflected can be suppressed to 2% or less, and therefore the visibility of the display

is improved.

In a case where the display surface has a curved shape, if the inorganic antireflection layer is adhered to a flat resin sheet by vapor deposition or sputtering, and molded into a curved shape, fissures or cracks occur in the inorganic anti-reflection layer. This is because the inorganic substance, such as a metal oxide film, is hard and cannot follow the expansion and contraction of the resin sheet during molding. Therefore, when the display surface has a curved shape, it is necessary to provide the anti-reflection layer after bending and molding the resin sheet or glass sheet to be used as a front plate. However, when an inorganic anti-reflection layer is provided on a curved sheet by a dry film forming method, since the orientation of the sheet from the vapor deposition source or the sputtering target is not constant, parts where a shadow is formed with respect to the vapor deposition source or sputtering target are formed, and as a result it is difficult to form the anti-reflection layer.

Thus, although various resin sheets or films for molding have been proposed, the issue of how to form a resin sheet or film capable of producing a resin molded article having suitable characteristics depending on the intended use is still to be resolved.

## PRIOR ART DOCUMENTS

### PATENT DOCUMENTS

Patent Document 1: Japanese Laid-Open Patent Publication No. 2001-334609
Patent Document 2: Japanese Laid-Open Patent Publication No. 2009-234184
Patent Document 3: Japanese Publication for Opposition No. H04-40183
Patent Document 4: Japanese Laid-Open Patent Publication No. 2010-284910
Patent Document 5: Japanese Laid-Open Patent Publication No. 2009-196153

## SUMMARY OF THE INVENTION

### PROBLEMS TO BE SOLVED BY THE INVENTION

An object of the present invention is to provide a resin sheet for molding that is high in hardness, less likely to cause appearance defects during molding, and has good visibility in which external light reflection is suppressed, and a resin molded article using the same.

### MEANS FOR SOLVING THE PROBLEMS

The present inventors have diligently researched a resin sheet for molding that includes a polycarbonate resin as a substrate, in which a high-hardness resin layer, a hard coat layer, and an anti-reflection layer are provided in this order on the surface of the substrate layer. As a result, the present inventors discovered when a difference between the glass transition point of the high-hardness resin and the glass transition point of the polycarbonate resin is within a specific numerical range, and when the anti-reflection layer is a wet anti-reflection layer obtained by a wet film forming method, such a case is advantageous for bending and molding. That is, the present invention is, for example, as follows.

<1> A resin sheet for molding including:

a substrate layer including a polycarbonate resin (a1);
a high-hardness resin layer including a high-hardness resin, wherein the high-hardness resin layer is provided on at least one surface of the substrate layer;
a hard coat layer or a hard coat anti-glare layer that is provided on at least one surface of the high-hardness resin layer; and
a wet anti-reflection layer that is laminated on a surface of the hard coat layer or hard coat anti-glare layer on an opposite side to the high-hardness resin layer side, wherein
the polycarbonate resin (a1) and the high-hardness resin each have a glass transition point that satisfies the following relationship.

$$-10\ ^\circ C \leq \text{(glass transition point of high-hardness resin)} - \text{(glass transition point of polycarbonate resin (a1))} \leq 40\ ^\circ C$$

<2> The resin sheet for molding according to <1>, wherein the polycarbonate resin (a1) is an aromatic polycarbonate resin.
<3> The resin sheet for molding according to <2>, wherein the aromatic polycarbonate resin includes a structural unit represented by the following formula (3a).

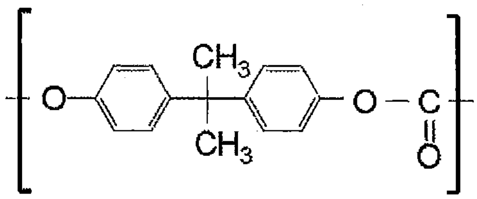

(3a)

<4> The resin sheet for molding according to any one of <1> to <3>, wherein a content of the polycarbonate resin (a1) is 75 to 100% by mass based on a total mass of the substrate layer.
<5> The resin sheet for molding according to any one of <1> to <4>, wherein the high-hardness resin includes at least one selected from the group consisting of:

a resin (B1), which is a copolymer including a (meth)acrylate structural unit (a) represented by the following general formula (1):

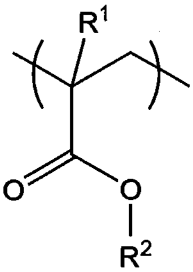

(1)

($R^1$ is a hydrogen atom or a methyl group, $R^2$ is an alkyl group having 1 to 18 carbon atoms) and an aliphatic vinyl structural unit (b) represented by the following general formula (2):

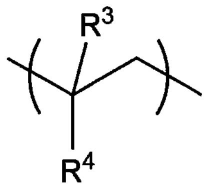

(2)

($R^3$ is a hydrogen atom or a methyl group, and $R^4$ is a cyclohexyl group which may be substituted with a hydrocarbon group having 1 to 4 carbon atoms),
a resin (B2), which is a copolymer including 6 to 77% by mass of a (meth)acrylate structural unit, 15 to 71% by mass of a styrene structural unit, and 8 to 23% by mass of an unsaturated dicarboxylic acid structural unit,
a resin (B3), which is a copolymer including a structural unit (c) represented by the following general formula (5):

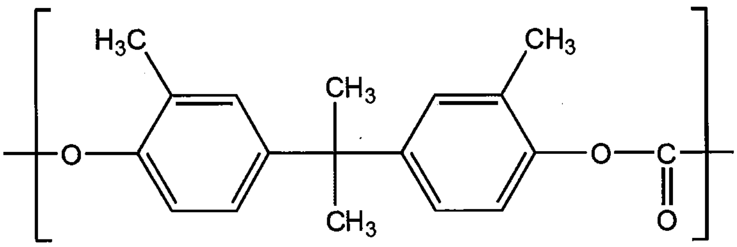

(5)

a resin (B4), which is a copolymer including 5 to 20% by mass of a styrene structural unit, 60 to 90% by mass of a (meth)acrylate structural unit, and 5 to 20% by mass of an N-substituted maleimide structural unit,
a resin (B5), which is a polymer including a structural unit (e) represented by the following general formula (7):

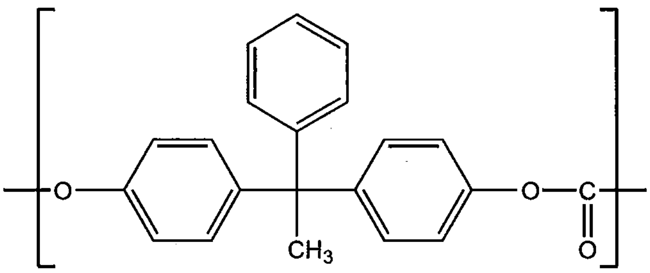

(7)

and a resin (B6), which is a copolymer including 50 to 95% by mass of a styrene structural unit and 5 to 50% by mass of an unsaturated dicarboxylic acid unit.

<6> The resin sheet for molding according to <5>, wherein the resin (B3) is a copolymer further including a structural unit (d) represented by the following formula (6).

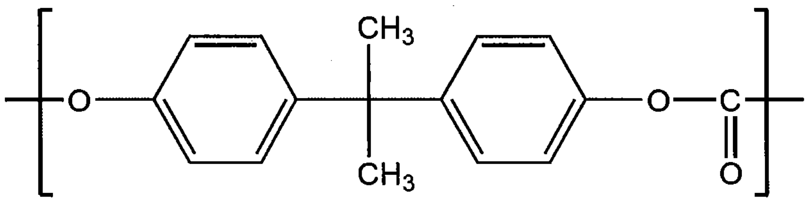

(6)

<7> A resin molded article produced by molding the resin sheet for molding according to any one of <1> to <6>.

ADVANTAGEOUS EFFECT OF THE INVENTION

According to the present invention, a resin sheet for molding that is high in hardness, less likely to cause appearance defects during molding, and has good visibility in which external light reflection is suppressed, and a resin molded article using the same, can be provided. In the present invention, since the wet antireflection layer is formed after arranging the high-hardness resin layer on a substrate layer including a polycarbonate resin and further arranging the hard coat layer or hard coat anti-glare layer on an outer side, it is possible to provide a resin plate that is resistant to scratches, has anti-glare properties and good visibility, and is easily bent by heat.

EMBODIMENTS FOR CARRYING OUT THE INVENTION

Hereinafter, the present invention will be described in detail by way of production examples, working examples, etc., but the present invention is not limited to those production examples, working examples, etc., and can be arbitrarily changed and then practiced within a range not substantially departing from the subject of the present invention.

The resin sheet for molding of the present invention (hereinafter sometimes referred to as just "resin sheet") comprises: a substrate layer that contains a polycarbonate resin (a1); a high-hardness resin layer that contains a high-hardness resin; and a hard coat layer or hard coat anti-glare layer, and the high-hardness resin layer is arranged between the substrate layer and the hard coat layer or hard coat anti-glare layer. An additional layer may exist between the

substrate layer and the high-hardness resin layer and between the high-hardness resin layer and the hard coat layer or hard coat anti-glare layer, respectively. Examples of the additional layer include, but are not limited to, an adhesive layer and a primer layer. The additional layer is not required to be present. In one embodiment, a resin sheet, which comprises: a substrate layer that contains a polycarbonate resin (a1); a high-hardness resin layer that is layered on at least one surface of the substrate layer; and a hard coat layer or hard coat anti-glare layer that is layered on the high-hardness resin layer, is provided.

It is sufficient when the high-hardness resin layer and the hard coat layer or hard coat anti-glare layer are provided on at least one side of the substrate layer, and the constitution of the other side is not particularly limited. Further, the high-hardness resin layer may be provided on both sides of the substrate layer, and in this case, the hard coat layer or hard coat anti-glare layer may be provided on one or both of the high-hardness resin layers. When the high-hardness resin layer is provided on both sides of the substrate layer, it is desirable to use the same high-hardness resin for the two high-hardness resin layers for obtaining a stable resin sheet with little warpage.

The resin sheet for molding of the present invention, which has high hardness, wherein an abnormal appearance such as a crack and a flow mark is not easily caused at the time of molding, can be obtained by providing the high-hardness resin layer between the substrate layer and the hard coat layer or hard coat anti-glare layer as described above, and by satisfying a predetermined relationship between the glass transition point of the polycarbonate resin (a1) in the substrate layer and the glass transition point of the high-hardness resin in the high-hardness resin layer. In particular, an abnormal appearance is not easily caused at the time of thermoforming, and since it is possible to set wide ranges of conditions for thermoforming (temperature, heating time, etc.), it can be said that such a resin sheet is suitable for thermoforming. Further, by sticking a resin film touch sensor in advance to the resin sheet suitable for thermoforming before molding, a difficult step of sticking a touch sensor to a front plate having a curved surface after molding can be omitted. Therefore, the productivity of display front plates having a curved surface can be improved.

A resin sheet having a hard coat layer or a hard coat anti-glare layer having high hardness on its surface like the present invention, particularly one in which a polycarbonate resin is used as a substrate, has more excellent impact resistance, higher safety and a less weight when compared to an ordinary glass plate. In addition, it is more easily bent when compared to the ordinary glass plate, and it is not broken when it is bent a little. It is considered that this is because the hard coat layer or the hard coat anti-glare layer of the resin sheet has flexibility to some extent.

By providing the high-hardness resin layer between the substrate layer and the hard coat layer or the hard coat anti-glare layer, the hardness of the resin sheet can be further increased. When the hard coat layer or the hard coat anti-glare layer is provided directly on the substrate layer, problems including a low elastic modulus and easiness of buckling may be caused, but by providing the high-hardness resin layer, such problems can be solved.

In the present invention, the glass transition point of the polycarbonate resin (a1) in the substrate layer and the glass transition point of the high-hardness resin in the high-hardness resin layer satisfy the relational expression:

$$-10^\circ C \leq \text{(glass transition point of high-hardness resin)} - \text{(glass transition point of polycarbonate resin (a1))} \leq 40^\circ C$$

Conventionally, when different types of resin layers are layered and a hard coat layer is provided thereon, glass transition points (Tg) and melt viscosities of resins contained in respective layers differ from each other, and there is a problem of difficulty in thermoforming without defects such as a crack. However, according to the present invention, by using the polycarbonate resin (a1) and the high-hardness resin that satisfy the above-described relational expression, the above-described problem can also be solved.

Usually, when thermoforming a resin sheet having a multilayer structure into a desired shape, thermoforming is performed at a molding temperature of a resin whose amount in the layers is the largest. For example, in the case of a resin sheet in which a polycarbonate resin is used as a substrate layer, since the amount of the polycarbonate resin that has satisfactory impact resistance is usually the largest, thermoforming is performed at a molding temperature of the polycarbonate resin. Since the polycarbonate resin (a1) and the high-hardness resin that satisfy the above-described relational expression are used for the resin sheet of the present invention, even when thermoforming is performed at a molding temperature suitable for the polycarbonate resin, the problem of abnormal appearance is not easily caused. Accordingly, it can be said that the resin sheet of the present invention is more suitable for thermoforming when compared to conventional ones.

The glass transition points of the polycarbonate resin (a1) and the high-hardness resin preferably satisfy the relational expression: -5°C ≤ (glass transition point of high-hardness resin) - (glass transition point of polycarbonate resin (a1)) ≤ 30°C, and more preferably satisfy the relational expression: 0°C ≤ (glass transition point of high-hardness resin) - (glass transition point of polycarbonate resin (a1)) ≤ 30°C. When Tg of the high-hardness resin is extremely lower than Tg of the polycarbonate resin (a1), the high-hardness resin is in a rubbery state or molten state at the time of thermoforming

and is easily moved. In this case, the hard coat anti-glare layer, which has a highly crosslinked structure and is still hard even when it is heated, cannot follow the movement of the high-hardness resin that has become easily movable, and a crack is easily generated. Meanwhile, when Tg of the high-hardness resin is too much higher than Tg of the polycarbonate resin (a1), the difference between the viscosity of the high-hardness resin and the viscosity of the polycarbonate resin becomes larger, and when these resins are layered, the interface becomes rough and a flow mark may be generated.

The resin sheet of the present invention can be suitably used for the production of a molded article having a curved shape that requires hardness. For example, since a component part having a curved portion that is continuous with a plane portion can be successfully produced, it is also possible to provide a product having a novel design or function.

When molded articles having the above-described shape are produced using conventional resin sheets, many defects such as a crack are generated at the time of thermoforming such as hot press molding, vacuum forming, pressure forming and TOM molding. For this reason, it is required to devise a method in which, for example, the hardness of a hard coat is reduced, in order to suppress the generation of a crack at the time of thermoforming. However, when the hardness of the hard coat is reduced, though thermoformability is improved, new problems such as easiness of damaging and reduction in chemical resistance are caused because the hard coat is soft.

Meanwhile, according to the present invention, since the generation of a crack is suppressed as described above, a resin sheet that can be thermoformed can be provided without reducing the hardness of a hard coat. The resin sheet of the present invention is not easily damaged and has high chemical resistance since a hard coat anti-glare layer that is hard can be provided as the surface layer. Utilizing these characteristics, the resin sheet of the present invention can be used for component parts of display surfaces of personal computers, mobile phones and the like, exterior and interior members of automobiles, cases and front plates having a curved surface in mobile phone terminals, personal computers, tablet PCs, car navigation systems and the like, etc.

Hereinafter, respective components of the resin sheet according to the present invention will be described.

<Substrate layer>

The substrate layer is a resin layer mainly composed of the polycarbonate resin (a1). The polycarbonate resin (a1) contained in the substrate layer may consist of one material or two or more materials. The content of the polycarbonate resin (a1) in the substrate layer is preferably 75 to 100% by mass, more preferably 90 to 100% by mass, and particularly preferably 100% by mass relative to the total mass of the substrate layer. By increasing the content of the polycarbonate resin, impact resistance is improved.

The polycarbonate resin (a1) is not particularly limited as long as it contains a carbonate bond, i.e., a -[O-R-OCO]- unit (wherein R may include an aliphatic group, an aromatic group, or both of the aliphatic group and the aromatic group, and it may have a linear structure or a branched structure) in the main chain of the molecule. However, it is preferably an aromatic polycarbonate resin, and it is particularly preferred to use a polycarbonate resin containing a structural unit of formula (3a) below. By using such a polycarbonate resin, a resin sheet having more excellent impact resistance can be obtained.

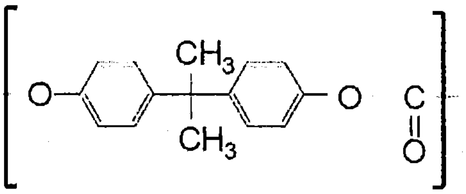

(3a)

Specifically, as the polycarbonate resin (a1), an aromatic polycarbonate resin (e.g., Iupilon S-2000, Iupilon S-1000 and Iupilon E-2000; manufactured by Mitsubishi Engineering-Plastics Corporation), etc. can be used preferably.

Recently, for the purpose of controlling the glass transition point of a polycarbonate resin, a polycarbonate resin to which a monovalent phenol represented by general formula (4) below as an end terminator is added is used. Similarly, in the present invention, a polycarbonate resin to which an end terminator is added can be used.

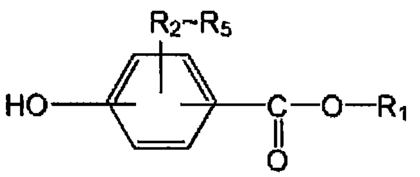

(4)

(In the formula, $R_1$ represents a $C_{8-36}$ alkyl group or a $C_{8-36}$ alkenyl group; $R_2$ to $R_5$ each independently represent a hydrogen atom, halogen, or a $C_{1-20}$ alkyl group or $C_{6-12}$ aryl group which may have a substituent; and in this regard, the substituent is halogen, a $C_{1-20}$ alkyl group or a $C_{6-12}$ aryl group.)

In this specification, the "alkyl group" and the "alkenyl group" may be linear or branched and may have a substituent.

More preferably, the monovalent phenol represented by general formula (4) is represented by general formula (4a) below:

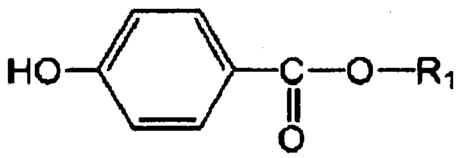

(4a)

(In the formula, $R_1$ represents a $C_{8-36}$ alkyl group or a $C_{8-36}$ alkenyl group.)

The carbon number of $R_1$ in general formula (4) or general formula (4a) is more preferably within a specific numerical range. Specifically, the upper limit of the carbon number of $R_1$ is preferably 36, more preferably 22, and particularly preferably 18. Further, the lower limit of the carbon number of $R_1$ is preferably 8, and more preferably 12.

Among monovalent phenols represented by general formula (4) or general formula (4a), it is particularly preferred to use one or both of p-hydroxybenzoic acid hexadecyl ester and p-hydroxybenzoic acid 2-hexyldecyl ester as the end terminator.

For example, when using a monovalent phenol represented by general formula (4a), wherein $R_1$ is a $C_{16}$ alkyl group, as the end terminator, it is possible to obtain a polycarbonate resin excellent in the glass transition temperature, melt flowability, moldability, drawdown resistance, etc., and it is particularly preferred because the solvent solubility of the monovalent phenol at the time of the production of the polycarbonate resin is also excellent.

Meanwhile, when the carbon number of $R_1$ in general formula (4) or general formula (4a) is increased too much, the organic solvent solubility of the monovalent phenol (end terminator) tends to be reduced, and the productivity at the time of the production of the polycarbonate resin may be reduced.

For example, when the carbon number of $R_1$ is 36 or less, the productivity at the time of the production of the polycarbonate resin is high, and economic efficiency is satisfactory. When the carbon number of $R_1$ is 22 or less, the monovalent phenol is particularly excellent in organic solvent solubility, the productivity at the time of the production of the polycarbonate resin is very high, and economic efficiency is improved. Examples of polycarbonate resins in which such a monovalent phenol is used include Iupizeta T-1380 (manufactured by Mitsubishi Gas Chemical Company, Inc.).

When the carbon number of $R_1$ in general formula (4) or general formula (4a) is too small, the glass transition point of the polycarbonate resin is not sufficiently low, and thermoformability may be reduced.

In the present invention, the weight average molecular weight of the polycarbonate resin (a1) may affect impact resistance and molding conditions of the resin sheet. Specifically, when the weight average molecular weight is too low, impact resistance of the resin sheet may be reduced. When the weight average molecular weight is too high, an excessive heat source may be required at the time of forming the substrate layer containing the polycarbonate resin (a1). Further, since high temperatures may be required depending on the molding method to be selected, the polycarbonate resin (a1) may be exposed to high temperatures, and it may adversely affect thermal stability thereof. The weight average molecular weight of the polycarbonate resin (a1) is preferably 15,000 to 75,000, more preferably 20,000 to 70,000, and even more preferably 20,000 to 65,000. In this specification, the weight average molecular weight is a standard polystyrene equivalent weight average molecular weight measured by gel permeation chromatography (GPC).

Those skilled in the art can suitably select and use the polycarbonate resin (a1), which has a glass transition point (Tg) satisfying the above-described relational expression, among publicly-known polycarbonate resins in consideration of Tg of the high-hardness resin to be used. Tg of the polycarbonate resin (a1) is preferably 90 to 190°C, more preferably 100 to 170°C, and particularly preferably 110 to 150°C. In this specification, the glass transition point is a temperature obtained by carrying out the measurement using a differential scanning calorimeter and 10 mg of a sample at a temperature raising rate of 10°C/min and calculation according to a midpoint method.

The substrate layer may contain another resin in addition to the polycarbonate resin (a1). Examples of said another resin include a polyester resin. It is preferred that the polyester resin mainly contains terephthalic acid as a dicarboxylic acid component, and a dicarboxylic acid component other than terephthalic acid may also be contained in the polyester resin.

For example, a polyester resin obtained by polycondensation of a glycol component containing 80 to 60 mol% of ethylene glycol that is the main component and 20 to 40 mol% of 1,4-cyclohexanedimethanol (100 mol% in total) (so-called "PETG") is preferred. It is preferred that the resin contained in the substrate layer is only the polycarbonate resin

(a1). When another resin is contained, the amount thereof is preferably 0 to 25% by mass, and more preferably 0 to 10% by mass relative to the total mass of the substrate layer.

The substrate layer may further contain an additive, etc. Additives usually used for resin sheets can be used, and examples of such additives include an antioxidant, an anti-coloring agent, an antistatic agent, a mold release agent, a lubricant, a dye, a pigment, a plasticizer, a flame retardant, a resin modifier, a compatibilizer, and a reinforcing material such as an organic filler and an inorganic filler. The method for mixing the additive and the resin is not particularly limited, and it is possible to use a method of compounding the total amount, a method of dry-blending a master batch, a method of dry-blending the total amount or the like. The amount of the additive is preferably 0 to 10% by mass, more preferably 0 to 7% by mass, and particularly preferably 0 to 5% by mass relative to the total mass of the substrate layer.

The thickness of the substrate layer is preferably 0.3 to 10 mm, more preferably 0.3 to 5 mm, and particularly preferably 0.3 to 3.5 mm.

<High-hardness resin layer>

The high-hardness resin layer includes a high-hardness resin. In addition, other resins, additives, and the like may be further included as necessary. In this specification, the high-hardness resin is a resin having a hardness higher than that of the polycarbonate resin used as the substrate, and means a resin having a pencil hardness of B or more, preferably HB to 3H, more preferably H to 3H, and further preferably 2H to 3H. The pencil hardness of the high-hardness resin layer is the result of evaluation in a pencil scratch hardness test based on JIS K 5600-5-4: 1999. Specifically, a pencil was pressed against the surface of the high-hardness resin layer at an angle of 45 degrees and the load was gradually increased to 750 g, and the hardness of the hardest pencil that did not cause scratches was evaluated as the pencil hardness of the high-hardness resin layer.

[High-hardness resin]

The high-hardness resin is not particularly limited, but preferably includes at least one selected from the group consisting of resins (B1) to (B6).

(Resin (B 1))

The resin (B1) is a copolymer including a (meth)acrylate structural unit (a) represented by general formula (1) and an aliphatic vinyl structural unit (b) represented by general formula (2). In this case, the resin (B1) may further have another structural unit. It is noted that in this specification, (meth)acrylic means methacrylic and/or acrylic.

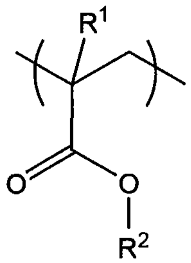

(1)

In the formula, $R^1$ is a hydrogen atom or a methyl group, and preferably a methyl group.

Further, $R^2$ is an alkyl group having 1 to 18 carbon atoms, preferably an alkyl group having 1 to 10 carbon atoms, and more preferably an alkyl group having 1 to 6 carbon atoms. Specific examples thereof include a methyl group, an ethyl group, a butyl group, a lauryl group, a stearyl group, a cyclohexyl group, and an isobornyl group. Of these, $R^2$ is preferably a methyl group or an ethyl group, and more preferably a methyl group.

When $R^2$ is a methyl group or an ethyl group, the (meth)acrylate structural unit (a) represented by general formula (1) is a (meth)acrylate structural unit. When $R^1$ is a methyl group and $R^2$ is a methyl group, the (meth)acrylate structural unit (a) represented by general formula (1) is a methyl methacrylate structural unit.

The resin (B1) may include only one type of the (meth)acrylate structural unit (a) represented by general formula (1), or may include two or more types.

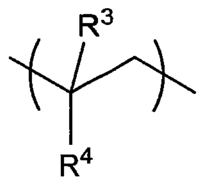

(2)

In the formula, $R^3$ is a hydrogen atom or a methyl group, and preferably a hydrogen atom.

$R^4$ is a cyclohexyl group which may be substituted with a hydrocarbon group having 1 to 4 carbon atoms, and preferably a cyclohexyl group having no substituents.

When $R^3$ is a hydrogen atom and $R^4$ is a cyclohexyl group, the aliphatic vinyl structural unit (b) represented by general formula (2) is a vinylcyclohexane structural unit.

The resin (B1) may include only one type of the aliphatic vinyl structural unit (b) represented by general formula (2), or may include two or more types.

In the present specification, the "hydrocarbon group" may be linear, branched, or cyclic, and may have a substituent.

The above-mentioned other structural unit is not particularly limited, and examples thereof may include a structural unit derived from an aromatic vinyl monomer including a non-hydrogenated aromatic double bond that is formed in the process of producing the resin (B1) by polymerizing a (meth)acrylate monomer and an aromatic vinyl monomer and then hydrogenating an aromatic double bond derived from the aromatic vinyl monomer. Specific examples of the other structural unit include a styrene structural unit.

The resin (B1) may include only one type of the other structural unit, or include two or more types.

The total content of the (meth)acrylate structural unit (a) and the aliphatic vinyl structural unit (b) is, based on all the structural units of the resin (B1), preferably 90 to 100 mol%, more preferably 95 to 100 mol%, and particularly preferably 98 to 100 mol%.

The content of the (meth)acrylate structural unit (a) represented by general formula (1) is, based on all the structural units of the resin (B1), preferably 65 to 80 mol%, and more preferably 70 to 80 mol%. The reason for this is because when the proportion of the (meth)acrylate structural unit (a) is 65 mol% or more, a resin layer having excellent adhesion to the substrate layer and surface hardness can be obtained, while when the proportion of the (meth)acrylate structural unit (a) is 80 mol% or less, warpage due to water absorption of the resin sheet is unlikely to occur.

The content of the aliphatic vinyl structural unit (b) represented by general formula (2) is, based on all the structural units of the resin (B1), preferably 20 to 35 mol%, and more preferably 20 to 30 mol%. The reason for this is because when the content of the aliphatic vinyl structural unit (b) is 20 mol% or more, warpage under high temperature and high humidity can be prevented, while when the content of the aliphatic vinyl structural unit (b) is 35 mol% or less, peeling at the interface with the substrate can be prevented.

Further, the content of the other structural unit is, based on all the structural units of the resin (B1), preferably 10 mol% or less, more preferably 5 mol% or less, and particularly preferably 2 mol% or less.

In the present specification, the "copolymer" may have any of a random copolymer structure, a block copolymer structure, and an alternating copolymer structure.

The weight average molecular weight of the resin (B1) is not particularly limited, but from the viewpoint of strength and moldability, it is preferably 50,000 to 400,000, and more preferably 70,000 to 300,000.

The glass transition point of the resin (B1) is preferably 110 to 140 °C, more preferably 110 to 135 °C, and particularly preferably 110 to 130 °C. The reason for this is because when the glass transition point is 110 °C or higher, the resin sheet is less likely to deform or crack in a hot environment or a hot moist environment, while when the temperature is 140 °C or lower, processability is excellent when molding is performed by continuous heat shaping using a mirror surface roll or a shaping roll or by batch type heat shaping using a mirror surface mold or a shaping die.

Specific examples of the resin (B1) include Optimus 7500 and 6000 (manufactured by Mitsubishi Gas Chemical). The resin (B1) may be used alone or in combination of two or more.

When the resin (B1) is used as a high-hardness resin, it is preferable to use Iupizeta T-1380 (manufactured by Mitsubishi Gas Chemical) as the polycarbonate resin (a1).

Further, it is particularly preferable to use a resin (B1) that is a copolymer including 75 mol% of a structural unit represented by general formula (1) (in which both $R^1$ and $R^2$ are methyl groups; methyl methacrylate) and 25 mol% of a structural unit represented by general formula (2) (in which $R^3$ is a hydrogen atom and $R^4$ is a cyclohexyl group; vinylcyclohexane) as the high-hardness resin, a polycarbonate resin including a structural unit of formula (3a) as the polycarbonate resin (a1), and a monohydric phenol represented by general formula (4a) (in which $R^1$ has 8 to 22 carbon atoms) as a terminal terminator.

The method for producing the resin (B1) is not particularly limited, and a resin obtained by polymerizing at least one type of (meth)acrylate monomer and at least one type of aromatic vinyl monomer and then hydrogenating an aromatic

double bond derived from the aromatic vinyl monomer is suitable.

The aromatic vinyl monomer is not particularly limited, and examples thereof include styrene, α-methylstyrene, p-hydroxystyrene, alkoxystyrene, chlorostyrene, and derivatives thereof. Of these, the aromatic vinyl monomer is preferably styrene.

A known method can be used for the polymerization of the (meth)acrylate monomer and the aromatic vinyl monomer. For example, production can be carried out by bulk polymerization, solution polymerization, or the like.

Bulk polymerization is carried out by a method in which a monomer composition including the above-mentioned monomer and a polymerization initiator is continuously supplied to a complete mixing tank and continuously polymerized at 100 to 180 °C. The monomer composition may optionally include a chain transfer agent.

The polymerization initiator is not particularly limited, and examples include organic peroxides such as t-amylperoxy-2-ethylhexanoate, t-butylperoxy-2-ethylhexanoate, benzoyl peroxide, 1,1-di(t-hexylperoxy)-3,3,5-trimethylcyclohexane, 1,1-di(t-hexylperoxy)cyclohexane, 1,1-di(t-butylperoxy)cyclohexane, t-hexylpropoxy isopropyl monocarbonate, t-amylperoxy normal-octoate, t-butylperoxy isopropyl monocarbonate, and di-t-butyl peroxide, and azo compounds such as 2,2'-azobisisobutyronitrile, 2,2'-azobis(2-methyl)butyronitrile), and 2,2'-azobis(2,4-dimethylvaleronitrile). These can be used alone or in combination of two or more.

The chain transfer agent is not particularly limited, and examples include an α-methylstyrene dimer.

Examples of the solvent used in solution polymerization include hydrocarbon solvents such as toluene, xylene, cyclohexane, and methylcyclohexane; ester solvents such as ethyl acetate and methyl isobutyrate, ketone solvents such as acetone and methyl ethyl ketone; ether solvents such as tetrahydrofuran and dioxane; and alcohol solvents such as methanol and isopropanol. These solvents may be used alone or in combination of two or more.

The solvent used in the hydrogenation reaction to hydrogenate the aromatic double bond derived from the aromatic vinyl monomer after polymerizing the (meth)acrylate monomer and the aromatic vinyl monomer may be the same as the above-mentioned polymerization solvent, or may be different. Examples of the solvent include hydrocarbon solvents such as cyclohexane and methylcyclohexane, ester solvents such as ethyl acetate and methyl isobutyrate, ketone solvents such as acetone and methyl ethyl ketone, ether solvents such as tetrahydrofuran and dioxane, alcohol solvents such as methanol and isopropanol, and the like.

The hydrogenation method is not particularly limited, and a known method can be used. For example, batch hydrogenation or continuous flow hydrogenation can be carried out at a hydrogen pressure of 3 to 30 MPa and a reaction temperature of 60 to 250 °C. The reason for this is because when the reaction temperature is 60 °C or higher, the reaction time does not take too long, while when the reaction temperature is 250 °C or lower, side reactions such as cleavage of the molecular chain and hydrogenation of the ester site do not occur or hardly occur.

Examples of the catalyst used in the hydrogenation reaction include a solid catalyst supporting a metal such as nickel, palladium, platinum, cobalt, ruthenium, and rhodium, or an oxide, salt, or complex compound of these metals, on a porous carrier such as carbon, alumina, silica, silica-alumina, or diatomaceous earth.

It is preferable that 70% or more of the aromatic double bond derived from the aromatic vinyl monomer is hydrogenated by the hydrogenation reaction. That is, the non-hydrogenation rate of the aromatic double bond included in the structural unit derived from the aromatic vinyl monomer is preferably less than 30%, more preferably less than 10%, and further preferably less than 5%. The reason for this is because when the non-hydrogenation rate is less than 30%, a resin having excellent transparency can be obtained. The structural unit of the non-hydrogenated portion can be another structural unit in the resin (B1).

(Resin (B2))

The resin (B2) is a copolymer including 6 to 77% by mass of a (meth)acrylate structural unit, 15 to 71% by mass of a styrene structural unit, and 8 to 23% by mass of an unsaturated dicarboxylic acid structural unit. In this case, the resin (B2) may further have another structural unit.

The (meth)acrylate monomer constituting the (meth)acrylate structural unit in the resin (B2) is not particularly limited, and examples include acrylic acid, methyl acrylate, ethyl acrylate, n-butyl acrylate, 2-ethylhexyl acrylate, methacrylic acid, methyl methacrylate, ethyl methacrylate, n-butyl methacrylate, 2-ethylhexyl methacrylate and the like. Of these, the (meth)acrylate monomer is preferably methyl methacrylate. The (meth)acrylate monomer may be included alone as a (meth)acrylate structural unit, or may be included in combination of two or more.

The content of the (meth)acrylate structural unit is, based on the total mass of the resin (B2), 6 to 77% by mass, and preferably 20 to 70% by mass.

The styrene structural unit in the resin (B2) is not particularly limited, and any known styrene monomer can be used. From the viewpoint of availability, examples of the styrene monomer include styrene, α-methylstyrene, o-methylstyrene, m-methylstyrene, p-methylstyrene, t-butylstyrene, and the like. Of these, from the viewpoint of compatibility, the styrene monomer is preferably styrene. The styrene monomer may be included alone as a styrene structural unit, or may be included in combination of two or more.

The content of the styrene structural unit is, based on the total mass of the resin (B2), 15 to 71% by mass, and preferably 20 to 66% by mass.

The unsaturated dicarboxylic acid anhydride monomer constituting the unsaturated dicarboxylic acid structural unit in the resin (B2) is not particularly limited, and examples include acid anhydrides such as maleic acid, itaconic acid, citraconic acid, and aconitic acid. Of these, from the viewpoint of compatibility with the styrene monomer, the unsaturated dicarboxylic acid anhydride monomer is preferably maleic anhydride. The unsaturated dicarboxylic acid anhydride monomer may be included alone as an unsaturated dicarboxylic acid structural unit, or may be included in combination of two or more.

The content of the unsaturated dicarboxylic acid structural unit is, based on the total mass of the resin (B2), 8 to 23% by mass, and preferably 10 to 23% by mass.

Examples of the other structural unit in the resin (B2) include N-phenylmaleimide and the like.

The content of the other structural unit is, based on all the structural units of the resin (B2), preferably 10 mol% or less, more preferably 5 mol% or less, and particularly preferably 2 mol% or less.

The total content of the (meth)acrylate structural unit, the styrene structural unit, and the unsaturated dicarboxylic acid structural unit is, based on all the structural units of the resin (B2), preferably 90 to 100 mol%, more preferably 95 to 100 mol%, and particularly preferably 98 to 100 mol%.

The weight average molecular weight of the resin (B2) is not particularly limited, but is preferably 50,000 to 300,000, and more preferably 80,000 to 200,000.

The glass transition point of the resin (B2) is preferably 90 to 150 °C, more preferably 100 to 150 °C, and particularly preferably 115 to 150 °C.

Specific examples of the resin (B2) include Resisfy R100, R200, and R310 (manufactured by Denka), Delpet 980N (manufactured by Asahi Kasei), hp55 (manufactured by Daicel Evonik), and the like. The above-mentioned resin (B2) may be used alone or in combination of two or more.

When the resin (B2) is used as a high-hardness resin, it is preferable to use a polycarbonate resin including the structural unit of formula (3a) as the polycarbonate resin (a1). Further, it is particularly preferable to use a monohydric phenol represented by general formula (4a) (in which $R^1$ has 8 to 22 carbon atoms) as a terminal terminator. Examples of such a polycarbonate resin include Iupizeta T-1380 (manufactured by Mitsubishi Gas Chemical) and Iupilon E-2000 (manufactured by Mitsubishi Engineering-Plastics).

Further, when the resin (B2) of a copolymer composed of 6 to 26% by mass of a methyl methacrylate structural unit, 55 to 71% by mass of a styrene structural unit, and 15 to 23% by mass of a maleic anhydride structural unit (R100, R200, or R310; manufactured by Denka) is used as a high-hardness resin, it is preferable to use Iupizeta T-1380 as the polycarbonate resin (a1).

In addition, when a resin (B2) that is a copolymer of 6% by mass of a methyl methacrylate structural unit, 71% by mass of a styrene structural unit, and 23% by mass of a maleic anhydride structural unit (R310; manufactured by Denka) is used as a high-hardness resin (B2), it is particularly preferable to use Iupizeta T-1380 as the polycarbonate resin (a1).

The method for producing the resin (B2) is not particularly limited, and examples include bulk polymerization and solution polymerization.

(Resin (B3))

The resin (B3) is a polymer including a structural unit (c) represented by formula (5). In this case, it is preferable that the polymer further includes a structural unit (d) represented by formula (6). In addition, the polymer may further include another structural unit.

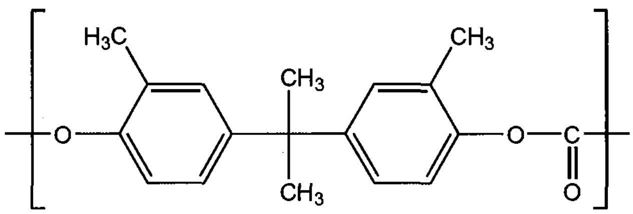

(5)

The content of the structural unit (c) represented by formula (5) is, based on all the structural units of the resin (B3), preferably 50 to 100 mol%, more preferably 60 to 100 mol%, and particularly preferably 70 to 100 mol%.

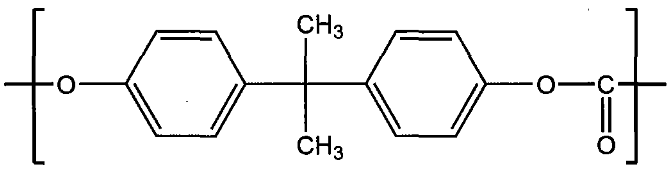

(6)

The content of the structural unit (d) represented by formula (6) is, based on all the structural units of the resin (B3), preferably 0 to 50 mol%, more preferably 0 to 40 mol%, and particularly preferably 0 to 30 mol%.

The content of the other structural unit is, based on all the structural units of the resin (B3), preferably 10 mol% or less, more preferably 5 mol% or less, and particularly preferably 2 mol% or less.

The total content of the structural unit (c) and the structural unit (d) is, based on all the structural units of the resin (B3), preferably 90 to 100 mol%, more preferably 95 to 100 mol%, and further preferably 98 to 100 mol%.

The weight average molecular weight of the resin (B3) is preferably 15,000 to 75,000, more preferably 20,000 to 70,000, and particularly preferably 25,000 to 65,000.

The glass transition point of the resin (B3) is preferably 105 to 150 °C, more preferably 110 to 140 °C, and particularly preferably 110 to 135 °C.

Specific examples of the resin (B3) include Iupilon KH3410UR, KH3520UR, and KS3410UR (manufactured by Mitsubishi Engineering-Plastics) and the like. The resin (B3) may be used alone or in combination of two or more.

When the resin (B3) is used as a high-hardness resin, it is preferable to use a polycarbonate resin including the structural unit of formula (3a) as the polycarbonate resin (a1). Further, it is preferable to use a monohydric phenol represented by general formula (4a) (in which $R^1$ has 8 to 22 carbon atoms) as a terminal terminator. Examples of such a polycarbonate resin include Iupizeta T-1380 (manufactured by Mitsubishi Gas Chemical). In particular, it is preferable to use Iupilon KS341OUR (manufactured by Mitsubishi Engineering-Plastics) as the resin (B3), and use Iupizeta T-1380 (manufactured by Mitsubishi Gas Chemical) as the polycarbonate resin (a1).

When the resin (B3) is used as a high-hardness resin, it is preferable to include another resin other than the resins (B1) to (B6). In this case, as the resin other than the resins (B1) to (B6), it is preferable to include a resin including the structural unit (d) without including the structural unit (c), and it is more preferable to include a resin composed only of the structural unit (d). Specifically, aromatic polycarbonate resins (for example, Iupilon S-2000, Iupilon S-1000, and Iupilon E-2000; manufactured by Mitsubishi Engineering-Plastics) and the like can be used.

When a resin other than the resins (B1) to (B6) is included, the proportion of the resin (B3) based on all the resins included in the high-hardness resin layer is preferably 45% by mass or more, and more preferably 55% by mass or more.

The method for producing the resin (B3) is not particularly limited, and can be produced by the same method as the method for producing the polycarbonate resin (a1) described above, except that bisphenol C is used as the monomer.

(Resin (B4))

The resin (B4) is a copolymer including 5 to 20% by mass of a styrene structural unit, 60 to 90% by mass of a (meth)acrylate structural unit, and 5 to 20% by mass of an N-substituted maleimide structural unit. The resin (B4) may further include another structural unit.

The styrene structural unit in the resin (B4) is not particularly limited, and any known styrene monomer can be used. From the viewpoint of availability, examples of the styrene monomer include styrene, α-methylstyrene, o-methylstyrene, m-methylstyrene, p-methylstyrene, t-butylstyrene, and the like. Of these, from the viewpoint of compatibility, the styrene monomer is preferably styrene. The styrene monomer may be included alone as a styrene structural unit, or may be included in combination of two or more.

The content of the styrene structural unit is, based on the total mass of the resin (B4), 5 to 20% by mass, preferably 5 to 15% by mass, and more preferably 5 to 10% by mass.

The (meth)acrylate monomer constituting the (meth)acrylate structural unit in the resin (B4) is not particularly limited, and examples include acrylic acid, methyl acrylate, ethyl acrylate, n-butyl acrylate, 2-ethylhexyl acrylate, methacrylic acid, methyl methacrylate, ethyl methacrylate, n-butyl methacrylate, 2-ethylhexyl methacrylate and the like. Of these, the (meth)acrylate monomer is preferably methyl methacrylate. The (meth)acrylate monomer may be included alone as a (meth)acrylate structural unit, or may be included in combination of two or more.

The content of the (meth)acrylate structural unit is, based on the total mass of the resin (B4), 60 to 90% by mass, preferably 70 to 90% by mass, and more preferably 80 to 90% by mass.

Examples of the N-substituted maleimide structural unit in the resin (B4) include structural units derived from an N-arylmaleimide such as N-phenylmaleimide, N-chlorophenylmaleimide, N-methylphenylmaleimide, N-naphthylmaleimide, N-hydroxyphenylmaleimide, N-methoxyphenylmaleimide, N-carboxyphenylmaleimide, N-nitrophenylmaleimide, and N-tribromophenylmaleimide. Of these, from the viewpoint of compatibility with the acrylic resin, a structural unit derived from N-phenylmaleimide is preferable. The structural unit derived from the above-mentioned N-substituted maleimide may be included alone as an N-substituted maleimide structural unit, or may be included in combination of two or more.

The content of the N-substituted maleimide structural unit is, based on the total mass of the resin (B4), 5 to 20% by mass, preferably 5 to 15% by mass, and more preferably 5 to 10% by mass.

Examples of the other structural unit include a (meth)acrylate structural unit represented by general formula (1) and an aliphatic vinyl structural unit represented by general formula (2). In this case, general formula (1) and general formula (2) are the same as those of the resin (B1) described above.

The content of the other structural unit is, based on all the structural units of the resin (B4), preferably 10 mol% or less, more preferably 5 mol% or less, and particularly preferably 2 mol% or less.

The total content of the styrene structural unit, the (meth)acrylate structural unit, and N-substituted maleimide structural unit is, based on all the structural units of the resin (B4), preferably 90 to 100 mol%, more preferably 95 to 100 mol%, and particularly preferably 98 to 100 mol%.

The weight average molecular weight of the resin (B4) is preferably 50,000 to 250,000, and more preferably 100,000 to 200,000.

The glass transition point of the resin (B4) is preferably 110 to 150 °C, more preferably 115 to 140 °C, and particularly preferably 115 to 135 °C.

Specific examples of the resin (B4) include Delpet PM120N (manufactured by Asahi Kasei Corporation). The above-mentioned resin (B4) may be used alone or in combination of two or more.

When the resin (B4) is used as a high-hardness resin, it is preferable to use a polycarbonate resin including the structural unit of formula (3a) as the polycarbonate resin (a1). Further, it is preferable to use a monohydric phenol represented by general formula (4a) (in which $R^1$ has 8 to 22 carbon atoms) as a terminal terminator. Examples of such a polycarbonate resin include Iupizeta T-1380 (manufactured by Mitsubishi Gas Chemical). In particular, it is preferable to use Delpet PM120N composed of 7% by mass of a styrene structural unit, 86% by mass of a methyl methacrylate structural unit, and 7% by mass of a N-substituted maleimide structural unit as the resin (B4), and use Iupizeta T-1380 as the polycarbonate resin (a1).

The method for producing the resin (B4) is not particularly limited, and production can be carried out by bulk polymerization, solution polymerization, or the like.

(Resin (B5))

The resin (B5) is a polymer including a structural unit (e) represented by formula (7). In this case, the resin (B5) may further include another structural unit.

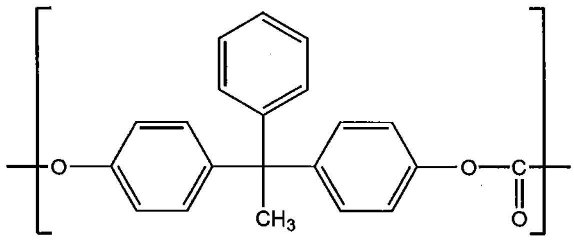 (7)

The content of the structural unit (e) represented by formula (7) is, based on all the structural units of the resin (B5), preferably 80 to 100 mol%, more preferably 90 to 100 mol%, and particularly preferably 95 to 100 mol%.

Examples of the other structural unit include the structural units represented by formula (5) and the structural units represented by formula (6). In this case, formula (5) and formula (6) are the same as for the resin (B3).

The content of the other structural unit is, based on all the structural units of the resin (B5), preferably 10 mol% or less, more preferably 5 mol% or less, and particularly preferably 2 mol% or less.

The weight average molecular weight of the resin (B5) is preferably 10,000 to 1,000,000, and more preferably 15,000 to 50,000.

The glass transition point of the resin (B5) is preferably 120 to 200 °C, more preferably 130 to 190 °C, and particularly preferably 140 to 190 °C.

Specific examples of the resin (B5) include Iupizeta FPC0220 (manufactured by Mitsubishi Gas Chemical) and the like. The resin (B5) may be used alone or in combination of two or more.

When the resin (B5) is used as a high-hardness resin, it is preferable to use a polycarbonate resin including

the structural unit of formula (3a) as the polycarbonate resin (a1). Examples of such a polycarbonate resin include Iupilon E-2000 (manufactured by Mitsubishi Engineering-Plastics). In particular, it is preferable to use Iupizeta FPC0220 (manufactured by Mitsubishi Gas Chemical) as the resin (B5), and use Iupilon E-2000 (manufactured by Mitsubishi Engineering-Plastics) as the polycarbonate resin (a1).

When the resin (B5) is used as a high-hardness resin, it is preferable to include another resin other than the resins (B1) to (B6). In this case, as the resin other than the resins (B1) to (B6), it is preferable to include a resin including the structural unit (d) without including the structural unit (c), and it is more preferable to include a resin composed only of the structural unit (d). Specifically, aromatic polycarbonate resins (for example, Iupilon S-2000, Iupilon S-1000, and Iupilon E-2000; manufactured by Mitsubishi Engineering-Plastics) and the like can be used.

When a resin other than the resins (B1) to (B6) is included, the proportion of the resin (B5) based on all the resins included in the high-hardness resin layer is preferably 45% by mass or more, and more preferably 55% by mass or more.

The method for producing the resin (B5) is not particularly limited, and can be produced by the same method as the method for producing the polycarbonate resin (a1) described above, except that bisphenol AP is used as the monomer.

(Resin (B6))

The resin (B6) is a copolymer including 50 to 95% by mass of a styrene structural unit and 5 to 50% by mass of an unsaturated dicarboxylic acid structural unit.

As the styrene structural unit, the styrene monomers described for the resin (B4) can be used. As the resin (B6), these styrene structural units may be used alone or in combination of two or more.

The content of the styrene structural unit is, based on the total mass of the resin (B6), preferably 50 to 95% by mass, more preferably 60 to 90% by mass, and further preferably 65 to 87% by mass.

Examples of the unsaturated dicarboxylic acid anhydride monomer constituting the unsaturated dicarboxylic acid structural unit include acid anhydrides such as maleic acid, itaconic acid, citraconic acid, and aconitic acid. Of these, from the viewpoint of compatibility with the styrene monomer, maleic anhydride is preferable. The unsaturated dicarboxylic acid anhydride monomer may be used alone, or may be used in combination of two or more.

The content of the unsaturated dicarboxylic acid structural unit is, based on the total mass of the resin (B6), preferably 5 to 50% by mass, more preferably 10 to 40% by mass, and further preferably 13 to 35% by mass.

The resin (B6) may include a structural unit other than the above structural unit. Examples of other structural units include a structural unit derived from the following general formula (1) and a structural unit derived from the general formula (2).

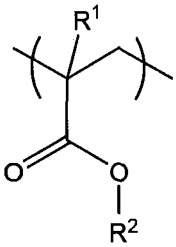

(1)

In the formula, $R^1$ and $R^2$ are the same as described above.

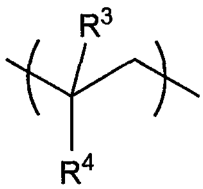

(2)

In the formula, $R^3$ and $R^4$ are the same as described above.

The content of the other structural unit is, based on all the structural units of the resin (B6), preferably 10 mol% or less, more preferably 5 mol% or less, and further preferably 2 mol% or less.

The weight average molecular weight of the resin (B6) is preferably 50,000 to 250,000, and more preferably 100,000 to 200,000.

The glass transition point of the resin (B6) is preferably 110 to 150 °C, more preferably 115 to 140 °C, and particularly preferably 115 to 137 °C.

Specific examples of the resin (B6) include XIBOND 140 and XIBOND 160 (manufactured by Polyscope). The resin (B6) may be used alone or in combination of two or more.

When the resin (B6) is used as a high-hardness resin, it is preferable to use a polycarbonate resin including the structural unit of formula (3a) as the polycarbonate resin (a1). Further, it is preferable to use a monohydric phenol represented by general formula (4a) (in which $R^1$ has 8 to 22 carbon atoms) as a terminal terminator. Examples of such a polycarbonate resin include Iupizeta T-1380 (manufactured by Mitsubishi Gas Chemical). In particular, it is preferable to use an alloy of XIBOND 160 composed of 78% by mass of a styrene structural unit and 22% by mass of a maleic anhydride structural unit and an acrylic resin as the resin (B6), and use Iupizeta T-1380 as the polycarbonate resin (a1).

The method for producing the resin (B6) is not particularly limited, and the resin (B6) can be produced by solution polymerization, bulk polymerization, or the like.

At least one selected from the group consisting of the above-mentioned resins (B1) to (B6) may be included as an alloy.

The alloy is not particularly limited, and examples include an alloy of two types of the resin (B1), an alloy of two types of the resin (B2), an alloy of two types of the resin (B3), an alloy of two types of the resin (B4), an alloy of two types of the resin (B5), an alloy of two types of the resin (B6), an alloy of the resin (B1) and the resin (B2), an alloy of the resin (B2) and the resin (B4), an alloy of the resin (B2) and another high-hardness resin, an alloy of the resin (B2) and an acrylic resin, an alloy of the resin (B6) and an acrylic resin alloy, and the like.

Examples of the other high-hardness resin include a methyl methacrylate-styrene copolymer, an acrylonitrile-butadiene-styrene copolymer, and the like.

Examples of the acrylic resin include polymethyl methacrylate, a copolymer of methyl methacrylate and methyl acrylate or ethyl acrylate, and the like. Examples of commercially available products include Acrypet (manufactured by Mitsubishi Chemical Corporation), Sumipex (manufactured by Sumitomo Chemical Co., Ltd.), Parapet (manufactured by Kuraray Co., Ltd.) and the like.

In the case of using two types of resin alloys, it is preferable to use alloys of resins having higher glass transition temperatures.

The above-mentioned alloys may be used alone or in combination of two or more.

The method for producing the alloy is not particularly limited, and an example includes a method of melt-kneading at a cylinder temperature of 240 °C using a twinscrew extruder having a screw diameter of 26 mm, extruding into strands, and pelletizing with a pelletizer.

The high-hardness resin included in the high-hardness resin layer may be one type or two or more types. In the case of selecting two or more types from the resins (B1) to (B6), resins from the same category or from different categories may be selected, and a high-hardness resin other than the resins (B1) to (B6) may be included.

The content of the high-hardness resin in the high-hardness resin layer is, based on the total mass of the high-hardness resin layer, preferably 70 to 100% by mass, more preferably 80 to 100% by mass, and particularly preferably 100% by mass.

[Other resins]

The high-hardness resin layer may include a resin other than the high-hardness resin. Examples of the other resin include a methyl methacrylate-styrene copolymer, polymethyl methacrylate, polystyrene, polycarbonate, a cycloolefin (co)polymer resin, an acrylonitrile-styrene copolymer, an acrylonitrile-butadiene-styrene copolymer, various elastomers, and the like. These other resins may be used alone or in combination of two or more.

The content of the other resin is, based on the total mass of the high-hardness resin layer, preferably 35% by mass or less, more preferably 25% by mass or less, and particularly preferably 10% by mass or less.

[Additives]

The high-hardness resin layer may include additives and the like. Examples of the additives include those described above that are used for the substrate layer.

[High-hardness resin layer]

The thickness of the high-hardness resin layer is preferably 10 to 250 μm, more preferably 30 to 200 μm, and particularly preferably 60 to 150 μm. The reason for this is because when the thickness of the high-hardness resin layer is 10 μm or more, surface hardness is high, while when the thickness of the high-hardness resin layer is 250 μm or less, impact resistance is high.

[Lamination of high-hardness resin layer on substrate layer]

As described above, another layer may exist between the substrate layer and the high-hardness resin layer, but here, a case where the high-hardness resin layer is laminated on the substrate layer will be described.

The method of laminating the high-hardness resin layer on the substrate layer is not particularly limited. Examples of the method include a method of superimposing a substrate layer and a high-hardness resin layer that have been separately formed and heat-bonding the two layers; a method of superimposing a substrate layer and a high-hardness resin layer that have been individually formed and adhering the two layers with an adhesive; a method of coextruding and molding the substrate layer and the high-hardness resin layer; a method of in-molding and integrating the substrate layer in the high-hardness resin layer, and the like. Of these, from the viewpoint of production costs and productivity, the coextrusion molding method is preferable.

The coextrusion method is not particularly limited. For example, in a method employing a feed block, the high-hardness resin layer is arranged on one side of the substrate layer with a feed block, extruded into a sheet shape with a T-die, and then cooled while passing through a molding roll to form the desired laminate. Further, in method employing a multi-manifold, the high-hardness resin layer is arranged on one side of the substrate layer in the multi-manifold die, extruded into a sheet shape, and then cooled while passing through a molding roll to form the desired laminate.

It is noted that in the above-mentioned methods can be used in the same manner when the high-hardness resin layer is laminated on a layer other than the substrate layer.

The total thickness of the substrate layer and the high-hardness resin layer is preferably 0.3 to 10 mm, more preferably 0.3 to 5.0 mm, and further preferably 0.3 to 3.5 mm. The reason for this is because when the total thickness is 0.3 mm or more, the rigidity of the sheet can be maintained, while when the total thickness is 10 mm or less, it is possible to prevent the sensitivity of the touch sensor from deteriorating when the touch panel is installed under the sheet, for example.

The ratio of the thickness of the substrate layer in the total thickness of the substrate layer and the high-hardness resin layer is preferably 75% to 99%, more preferably 80 to 99%, and particularly preferably 85 to 99%. When the ratio is within the above-described range, a balance between hardness and impact resistance can be achieved.

<Hard coat layer, Hard coat anti-glare layer>

The resin sheet of the present invention has a hard coat layer or a hard coat anti-glare layer. An additional layer may exist between the hard coat layer or the hard coat anti-glare layer and the high-hardness resin layer, but it is preferred that the hard coat layer or the hard coat anti-glare layer is layered on the high-hardness resin layer. The hard coat layer or the hard coat anti-glare layer is preferably prepared with an acrylic hard coat. In this specification, the "acrylic hard coat" means a coating film in which a monomer or oligomer or prepolymer containing a (meth)acryloyl group as a polymerization group is polymerized to form a crosslinked structure. It is preferred that the composition of the acrylic hard coat comprises 2 to 98% by mass of a (meth)acrylic monomer, 2 to 98% by mass of a (meth)acrylic oligomer and 0 to 15% by mass of a surface modifying agent. In addition, it is preferred that 0.001 to 7 parts by mass of a photopolymerization initiator is contained relative to 100 parts by mass of the total of the (meth)acrylic monomer, the (meth)acrylic oligomer and the surface modifying agent.

The hard coat layer or the hard coat anti-glare layer more preferably comprises 5 to 50% by mass of the (meth)acrylic monomer, 50 to 94% by mass of the (meth)acrylic oligomer and 1 to 10% by mass of the surface modifying agent, and particularly preferably comprises 20 to 40% by mass of the (meth)acrylic monomer, 60 to 78% by mass of the (meth)acrylic oligomer and 2 to 5% by mass of the surface modifying agent.

The amount of the photopolymerization initiator is more preferably 0.01 to 5 parts by mass, and particularly preferably 0.1 to 3 parts by mass relative to 100 parts by mass of the total of the (meth)acrylic monomer, the (meth)acrylic oligomer and the surface modifying agent.

(1) (Meth)acrylic monomer

As the (meth)acrylic monomer, those in which a (meth)acryloyl group as a functional group exits in the molecule can be used. The (meth)acrylic monomer may be a monofunctional monomer or a difunctional monomer or a trifunctional or higher monomer.

Examples of the monofunctional monomer include (meth)acrylic acid and (meth)acrylic acid ester. Specific examples of difunctional and/or trifunctional or higher (meth)acrylic monomers include diethylene glycol di(meth)acrylate, dipropylene glycol di(meth)acrylate, tripropylene glycol di(meth)acrylate, 1,6-hexanediol di(meth)acrylate, bisphenol A diglycidyl ether di(meth)acrylate, tetraethylene glycol di(meth)acrylate, neopentylglycol hydroxypivalate diacrylate, neopentylglycol di(meth)acrylate, 1,4-butanediol diacrylate, 1,3-butylene glycol di(meth)acrylate, dicyclopentanyl di(meth)acrylate, polyethylene glycol diacrylate, 1,4-butanediol oligoacrylate, neopentyl glycol oligoacrylate, 1,6-hexanediol oligoacrylate, trimethylol propane tri(meth)acrylate, trimethylol propane ethoxy tri(meth)acrylate, trimethylol propane propoxy tri(meth)acrylate, pentaerythritol tri(meth)acrylate, glyceryl propoxy tri(meth)acrylate, trimethylol propane trimethacrylate, trimethylol propane ethylene oxide adduct triacrylate, glycerin propylene oxide adduct triacrylate and pentaerythritol tetraacrylate.

The hard coat layer or the hard coat anti-glare layer may contain one or two or more (meth)acrylic monomers.

(2) (Meth)acrylic oligomer

Examples of the (meth)acrylic oligomer include a difunctional or higher polyfunctional urethane (meth)acrylate oligomer [hereinafter also referred to as a polyfunctional urethane (meth)acrylate oligomer], a difunctional or higher polyfunctional polyester (meth)acrylate oligomer [hereinafter also referred to as a polyfunctional polyester (meth)acrylate oligomer] and a difunctional or higher polyfunctional epoxy (meth)acrylate oligomer [hereinafter also referred to as a polyfunctional epoxy (meth)acrylate oligomer. The hard coat layer or the hard coat anti-glare layer may contain one or two or more (meth)acrylic oligomers.

Examples of the polyfunctional urethane (meth)acrylate oligomer include: a urethanation reaction product of a (meth)acrylate monomer having at least one (meth)acryloyloxy group and hydroxyl group in one molecule and a polyisocyanate; and a urethanation reaction product of an isocyanate compound that is obtained by reacting a polyol with a polyisocyanate and a (meth)acrylate monomer having at least one (meth)acryloyloxy group and hydroxyl group in one molecule.

Examples of the (meth)acrylate monomer having at least one (meth)acryloyloxy group and hydroxyl group in one molecule to be used in the urethanation reaction include 2-hydroxyethyl (meth)acrylate, 2-hydroxypropyl (meth)acrylate, 2-hydroxybutyl (meth)acrylate, 2-hydroxy-3-phenoxypropyl (meth)acrylate, glycerin di(meth)acrylate, trimethylol propane di(meth)acrylate, pentaerythritol tri(meth)acrylate and dipentaerythritol penta(meth)acrylate.

Examples of the polyisocyanate to be used in the urethanation reaction include polyisocyanates (di- or tri-) such as hexamethylene diisocyanate, lysine diisocyanate, isophorone diisocyanate, dicyclohexylmethane diisocyanate, tolylene diisocyanate, xylylene diisocyanate, diisocyanates obtained by hydrogenation of an aromatic isocyanate among these diisocyanates (e.g., diisocyanates such as hydrogenated tolylene diisocyanate and hydrogenated xylylene diisocyanate), triphenylmethane triisocyanate and dimethylene triphenyl triisocyanate; and polyisocyanates obtained by multimerization of a diisocyanate.

As the polyol to be used in the urethanation reaction, aromatic, aliphatic and alicyclic polyols, a polyester polyol, a polyether polyol, etc. are generally used. Usually, examples of aliphatic and alicyclic polyols include 1,4-butanediol, 1,6-hexanediol, neopentyl glycol, ethylene glycol, propylene glycol, trimethylolethane, trimethylolpropane, dimethylolheptane, dimethylol propionic acid, dimethylol butyric acid, glycerin and hydrogenated bisphenol A.

Examples of the polyester polyol include those obtained by a dehydration condensation reaction of the above-described polyol and a polycarboxylic acid. Specific examples of the polycarboxylic acid include succinic acid, adipic acid, maleic acid, trimellitic acid, hexahydrophthalic acid, phthalic acid, isophthalic acid and terephthalic acid. These polycarboxylic acids may be in the form of an anhydride. Further, examples of the polyether polyol include polyalkylene glycol and a polyoxyalkylene-modified polyol that is obtained by a reaction of the above-described polyol or a phenol with alkylene oxide.

The polyfunctional polyester (meth)acrylate oligomer is obtained by a dehydration condensation reaction using (meth)acrylic acid, a polycarboxylic acid and a polyol. Examples of the polycarboxylic acid to be used in the dehydration condensation reaction include succinic acid, adipic acid, maleic acid, itaconic acid, trimellitic acid, pyromellitic acid, hexahydrophthalic acid, phthalic acid, isophthalic acid and terephthalic acid. These polycarboxylic acids may be in the form of an anhydride. Further, examples of the polyol to be used in the dehydration condensation reaction include 1,4-butanediol, 1,6-hexanediol, diethylene glycol, triethylene glycol, propylene glycol, neopentyl glycol, dimethylolheptane, dimethylol propionic acid, dimethylol butyric acid, trimethylolpropane, ditrimethylolpropane, pentaerythritol and dipentaerythritol.

The polyfunctional epoxy (meth)acrylate oligomer is obtained by an addition reaction of a polyglycidyl ether and (meth)acrylic acid. Examples of the polyglycidyl ether include ethylene glycol diglycidyl ether, propylene glycol diglycidyl ether, tripropylene glycol diglycidyl ether, 1,6-hexanediol diglycidyl ether and bisphenol A diglycidyl ether.

(3) Surface modifying agent

Examples of the surface modifying agent to be used in the present invention include those that modify surface performance of the hard coat anti-glare layer such as a leveling agent, an antistatic agent, a surfactant, a water-repellent oil-repellent agent, inorganic particles and organic particles.

Examples of the leveling agent include polyether-modified polyalkylsiloxane, polyether-modified siloxane, polyester-modified hydroxyl group-containing polyalkylsiloxane, polyether-modified polydimethylsiloxane having an alkyl

group, modified polyether and silicon-modified acrylic.

Examples of the antistatic agent include glycerin fatty acid ester monoglyceride, glycerin fatty acid ester organic acid monoglyceride, polyglycerin fatty acid ester, sorbitan fatty acid ester, a cationic surfactant and an anionic surfactant.

Examples of the inorganic particles include silica particles, alumina particles, zirconia particles, silicon particles, silver particles and glass particles.

Examples of the organic particles include acrylic particles and silicon particles.

Examples of the surfactant and the water-repellent oil-repellent agent include fluorine-containing surfactants and water-repellent oil-repellent agents such as a fluorine-containing group/lipophilic group-containing oligomer and a fluorine-containing group/hydrophilic group/lipophilic group/UV reactive group-containing oligomer.

(4) Photopolymerization initiator

The hard coat layer or the hard coat anti-glare layer may contain a photopolymerization initiator. In this specification, the photopolymerization initiator means a photoradical generator.

Examples of a monofunctional photopolymerization initiator that can be used in the present invention include: 4-(2-hydroxyethoxy)phenyl(2-hydroxy-2-propyl) ketone [Darocur 2959: manufactured by Merck]; $\alpha$-hydroxy-$\alpha$,$\alpha$'-dimethylacetophenone [Darocur 1173: manufactured by Merck]; acetophenone-based initiators such as methoxyacetophenone, 2,2'-dimethoxy-2-phenylacetophenone [Irgacure 651] and 1-hydroxy-cyclohexylphenylketone; benzoin ether-based initiators such as benzoin ethyl ether and benzoin isopropyl ether; and other materials including halogenated ketone, acylphosphinoxide and acylphosphonate.

(5) Method for forming hard coat layer, hard coat anti-glare layer

The method for forming the hard coat layer or the hard coat anti-glare layer is not particularly limited. For example, it can be formed by applying a hard coat solution onto a layer that is to be positioned under the hard coat anti-glare layer (e.g., high-hardness resin layer), followed by performing photopolymerization.

The method of applying the hard coat solution (polymerizable composition) is not particularly limited, and a publicly-known method can be used. Examples thereof include a spin-coating method, a dipping method, a spraying method, a slide coating method, a bar coating method, a roll coating method, a gravure coating method, a meniscus coating method, a flexographic printing method, a screen printing method, a beat coating method and a brushing method.

As a lamp to be used for light irradiation at the time of photopolymerization, a lamp having a light emission distribution at a light wavelength of 420 nm or lower is used. Examples thereof include a low-pressure mercury lamp, a medium-pressure mercury lamp, a high-pressure mercury lamp, an ultrahigh pressure mercury lamp, a chemical lamp, a black light lamp, a microwave-excited mercury lamp and a metal halide lamp. Among them, the high-pressure mercury lamp or metal halide lamp is preferred because it efficiently emits a light in the active wavelength region of the initiator and it does not often emit a short-wavelength light, which reduces viscoelastic properties of a polymer obtained due to crosslinking, or a long-wavelength light, which heats and evaporates a reaction composition.

The irradiation intensity of the above-described lamp is a factor that influences the polymerization degree of the obtained polymer and is suitably controlled depending on every performance of an intended product. When blending a usual cleavage-type initiator having an acetophenone group, the illuminance is preferably 0.1 to 300 $mW/cm^2$. It is particularly preferred that the metal halide lamp is used and that the illuminance is 10 to 40 $mW/cm^2$.

A photopolymerization reaction is inhibited by oxygen in the air or oxygen dissolved in a reactive composition. For this reason, light irradiation is desirably carried out by using a technique that can prevent reaction inhibition caused by oxygen. As one of such techniques, there is a method in which a reactive composition is covered with a film made of polyethylene terephthalate or Teflon to block contact with oxygen and the reactive composition is irradiated with a light through the film. Alternatively, the composition may be irradiated with a light through a lighttransmitting window under an inert atmosphere in which oxygen is replaced with an inert gas such as nitrogen gas and carbon dioxide gas.

When light irradiation is carried out under an inert atmosphere, a constant amount of an inert gas is continuously introduced in order to keep the oxygen concentration in the atmosphere at a low level. By this introduction of the inert gas, an air flow is generated on the surface of a reactive composition to cause monomer evaporation. For suppressing the level of monomer evaporation, the airflow velocity of the inert gas, as the velocity relative to a hard coat solution-applied layered body that moves under the inert gas atmosphere, is preferably 1 m/sec or less, and more preferably 0.1 m/sec or less. When the airflow velocity is within the above-described range, monomer evaporation due to the air flow is substantially suppressed.

For the purpose of improving adhesion of the hard coat layer or the hard coat anti-glare layer, the coated surface may be subjected to a pretreatment. Examples of the pretreatment include publicly-known methods such as a sandblasting method, a solvent treatment method, a corona discharge treatment method, a chromic acid treatment method, a flame treatment method, a hot air treatment method, an ozone treatment method, an ultraviolet treatment method, and a primer

treatment method using a resin composition.

The hard coat layer or the hard coat anti-glare layer preferably has a pencil hardness of 2H or harder when ultraviolet irradiation is performed using a metal halide lamp having a UV light (254 nm) irradiation output of 20 $mW/cm^2$.

The thickness of the hard coat layer or the hard coat anti-glare layer is desirably 1 μm to 40 μm, and more desirably 2 μm to 10 μm. When the thickness is 1 μm or more, sufficient hardness can be obtained. When the thickness is 40 μm or less, the generation of a crack at the time of the curving process can be suppressed. Note that the thickness of the hard coat anti-glare layer can be measured by observing the cross section thereof using a microscope or the like and performing the actual measurement from the coating film interface to the surface.

The hard coat layer or hard coat anti-glare layer can be produced by applying an acrylic hard coat between a mirror surface mold or anti-glare mold and the high-hardness resin, irradiating it with UV light to be cured, and then releasing it from the mirror surface mold or anti-glare mold. When using the mirror surface mold, the resin sheet has a mirror surface hard coat layer, and when using the anti-glare mold, the resin sheet has a hard coat anti-glare layer. The material of the mirror surface mold or anti-glare mold is not limited as long as it transmits UV light, and examples of the material include glass and transparent resin.

The hard coat layer or hard coat anti-glare layer may be further modified. For example, any one or more of an antireflection treatment, an antifouling treatment, an antistatic treatment, a weather resistance treatment and an anti-glare treatment can be applied thereto. The methods for these treatments are not particularly limited, and publicly-known methods can be used. Examples thereof include a method of applying a reflection-reducing paint, a method of depositing a dielectric thin film and a method of applying an antistatic paint.

The pencil hardness of the resin sheet of the present invention is preferably 2H or harder, for example, 2H to 4H, and particularly preferably 3H to 4H. In this regard, the pencil hardness of the resin sheet means the highest hardness of the pencil, with which the surface of the hard coat anti-glare layer was not damaged when the pencil was pressed against the surface at an angle of 45° with respect to the surface with a load of 750 g, while increasing the hardness thereof (pencil scratch hardness test in accordance with JIS K 5600-5-4).

<Wet anti-reflection layer>

The present invention relates to a resin sheet for molding in which an antireflection layer is formed on the surface of a hard coat anti-glare layer by a wet film forming method. The present inventors made the surprising discovery that when a molded article having a bent shape is produced by providing a wet anti-reflection layer obtained by a wet film forming method on the above-mentioned resin sheet, cracks do not occur in the hard coat layer or the anti-reflection layer. On the other hand, there are problems in that when a non-wet anti-reflection layer obtained by a dry film forming method, such as an inorganic film forming method, is provided on the above-mentioned resin sheet, it is difficult to produce a molded article having a bent shape, and cracks occur in the hard coat layer and anti-reflection layer.

In the present invention, a laminate of a film having a high refractive index and a film having a low refractive index or a single layer body having a low refractive index can be formed on the surface of a hard coat layer or a hard coat anti-glare layer by a wet film forming method such as a gravure coating method, a dip method, a spin coating method, or a die coating method using a solution prepared so as to contain an organic substance and an organic solvent. In the formation of the wet anti-reflection layer by the wet film forming method, the high refractive index layer can be formed by using a solution in which $ZrO_2$ nanoparticles are dispersed in a (meth)acrylic oligomer or a (meth)acrylic monomer, and the low refractive index layer can be formed by using a solution in which $SiO_2$ particles or hollow $SiO_2$ particles are dispersed in a (meth)acrylic oligomer or a (meth)acrylic monomer.

The wet anti-reflection layer produced by using a solution prepared so as to contain an organic substance and an organic solvent is more elongated than an inorganic anti-reflection layer, and thus fissures and cracks are less likely to occur even if bending and molding are carried out after attachment to a flat resin sheet. Therefore, it is not necessary to provide the anti-reflection layer on a front plate having a curved shape, and bending and molding may be carried out after forming the antireflection layer on a flat resin sheet. In addition, by attaching an anti-reflection layer formed by a wet method on a resin sheet in which a hard coat layer or a hard coat anti-glare layer is laminated, a resin sheet for molding provided with an anti-reflection layer that is high in hardness and less likely to cause appearance defects can be obtained.

In the case of forming a multi-layer film, it is better to laminate the wet antireflection layer in the order of the high refractive index layer and then the low refractive index layer from the hard coat layer or hard coat anti-glare layer side. In the case that the anti-reflection layer is provided as a single layer, the low refractive index layer may be provided on the hard coat layer or hard coat anti-glare layer.

The refractive index of the high refractive index layer is preferably 1.6 or more, and more preferably 1.7 or more. The refractive index of the low refractive index layer is preferably 1.4 or less, and more preferably 1.3 or less.

The high refractive index layer can be produced by dispersing zirconia particles or titania particles in a mixture including a (meth)acrylic monomer, a (meth)acrylic oligomer, a photoinitiator, and an organic solvent, and then coating

the mixture by a gravure coating method, a dip method, a spin coating method, or the like. After coating, the organic solvent is dried, and the high refractive index layer can be cured by irradiating with UV light. The coating thickness is preferably 50 to 250 nm, and more preferably 100 to 200 nm.

The low refractive index layer can be produced by dispersing silica particles or hollow silica particles in a mixture including a (meth)acrylic monomer, a (meth)acrylic oligomer, a photoinitiator, and an organic solvent, and then coating the mixture by a gravure coating method, a dip method, a spin coating method, or the like. After coating, the organic solvent is dried, and the low refractive index layer can be cured by irradiating with UV light. The coating thickness is preferably 20 to 200 nm, and more preferably 50 to 150 nm.

According to one embodiment of the present invention, a resin molded article molded using the above-mentioned resin sheet for molding is provided. The molding method is not particularly limited, but thermoforming is suitable because of the characteristics of the resin sheet of the present invention. The thermoforming can be carried out by methods commonly used in the art, and examples include hot press molding, compressed air molding, vacuum forming, and TOM molding. The molding temperature is preferably 100 °C to 200 °C.

## EXAMPLES

Hereinafter, working examples of the present invention will be described, but the present invention is not limited to embodiments of the working examples.

<Measurement of glass transition point (Tg)>

The glass transition point of the polycarbonate resins and high-hardness resins used in the examples and comparative examples was measured using a differential scanning calorimeter DSC7020 manufactured by Hitachi High-Tech Science on a sample of 10 mg at a heating rate of 10 °C/min, and calculating based on the midpoint method.

<Measurement of reflectance>

The opposite side of the anti-reflection layer of the resin sheet for molding was painted black with a black marker pen, and the visual reflectance was measured with a SD-7000 manufactured by Nippon Denshoku. For the visual reflectance, a value including specular reflection (SCI) was adopted.

<Measurement of pencil hardness of resin sheet>

Each of the resin sheets produced in the Examples and Comparative Examples was evaluated by the pencil scratch hardness test in accordance with JIS K 5600-5-4. The highest hardness of the pencil, with which the surface of the hard coat anti-glare layer was not damaged when the pencil was pressed against the surface at an angle of 45° with respect to the surface with a load of 750 g, while increasing the hardness thereof, was evaluated as the pencil hardness. The hardness of 2H or harder was evaluated as acceptable.

<Production of molded article having curved shape and evaluation of crack of hard coat after molding>

The resin sheets produced in the Examples and Comparative Examples were subjected to thermoforming. Regarding Examples 1-3 and 5-15 and Comparative Examples 1-6 and 8-11, molds for hot pressing with a clearance (gap between an upper mold and a lower mold for sandwiching a sheet for molding) of 2 mm and a molding R of 50 mm were used, and regarding Example 4 and Comparative Example 7, molds for hot pressing with a clearance of 3.5 mm and a molding R of 100 mm were used. The pressure applied to the molds for hot pressing was 0.6 MPa. The material of the molds was aluminum. The mold temperature at the time of thermoforming was 124°C in Examples 1-5, 7-11 and 13-15 and Comparative Examples 1-4, 9 and 10, and 143°C in Examples 6 and 12 and Comparative Examples 5-8 and 11.

Regarding the obtained molded articles, the presence or absence of a crack in the 50 mm R portion or 100 mm R portion was confirmed. Note that when a resin sheet in which the total thickness of the substrate layer and the high-hardness resin layer is 0.5 mm, 1.2 mm or 1.5 mm was formed using the molds for hot pressing with the clearance of 2 mm, a single-layer polycarbonate sheet of 1.5 mm, 0.8 mm or 0.5 mm was laid under it to adjust the total thickness to be 2 mm, thereby performing hot press molding.

<Flow mark>

Regarding each layered body of the high-hardness resin layer and the polycarbonate resin layer before hard-coated produced in the Examples and Comparative Examples, outer appearance thereof was visually examined under

a three-wavelength fluorescent lamp to confirm the presence or absence of a scaly pattern and white turbidity. The case where none of scaly pattern and white turbidity was observed was evaluated as "flow mark is absent", and the case where a scaly pattern or white turbidity was observed was evaluated as "flow mark is present".

Example 1: R100 (Tg: 124°C)/low Tg PC (Tg: 125°C)/1.2 mmt

A layered body consisting of a substrate layer and a high-hardness resin layer was formed using a multilayer extrusion apparatus having a single screw extruder with a screw diameter of 35 mm, a single screw extruder with a screw diameter of 65 mm, a feed block connected to the respective extruders and a T-die connected to the feed block. Specifically, a high-hardness resin (B2) (copolymer containing 21% by mass of a methyl methacrylate structural unit, 64% by mass of a styrene structural unit and 15% by mass of a maleic anhydride structural unit; RESISFY R100 (manufactured by Denka)) was continuously introduced into the single screw extruder with the screw diameter of 35 mm and extruded at a cylinder temperature of 230°C and a discharge rate of 2.6 kg/hour. Further, a polycarbonate resin (Iupizeta T-1380; manufactured by Mitsubishi Gas Chemical Company, Inc.) was continuously introduced into the single screw extruder with the screw diameter of 65 mm and extruded at a cylinder temperature of 240°C and a discharge rate of 50.0 kg/hour.

The extruded high-hardness resin and the extruded polycarbonate resin were introduced into the feed block having a distribution pin for two types of two layers, and the high-hardness resin and the polycarbonate resin were layered at 240°C. It was further introduced into the T-die at 240°C to be extruded into a sheet shape, and using 3 mirror-finished rolls each at 120°C, 130°C and 190°C from the upstream side, it was transferred on the mirror surfaces and cooled and stretched, thereby obtaining the layered body consisting of the high-hardness resin layer and the polycarbonate resin layer (substrate layer). The stretching magnification was 1.3 times. The thickness of the obtained layered body was 1.2 mm, and the thickness of the high-hardness resin layer near the center thereof was 60 $\mu$m.

A hard coat anti-glare layer was formed on the high-hardness resin layer side of the layered body obtained above. The material of the hard coat anti-glare layer is as described below.

Relative to 100 parts by mass of a mixture containing:

U6HA: hexafunctional urethane acrylate oligomer (manufactured by Shin-Nakamura Chemical Co., Ltd.), 60% by mass;
4EG-A: PEG200 # diacrylate (manufactured by Kyoeisha Chemical Co., Ltd.), 35% by mass; and
RS-90: fluorine-containing group/hydrophilic group/lipophilic group/UV reactive group-containing oligomer (manufactured by DIC), 5% by mass,
Photopolymerization initiator: I-184 (manufactured by BASF [compound name: 1-hydroxy-cyclohexyl phenyl ketone]), 1 part by mass

The above-described material was applied to the layered body using a bar coater, the concave-convex surface of a frosted glass plate having a haze of 10% and a thickness of 2 mm was attached thereon, and it was irradiated with a metal halide lamp (20 mW/$cm^2$) from above the glass plate for 5 seconds to cure the hard coat. After the hard coat anti-glare layer was bonded, the frosted glass plate was removed, thereby preparing a resin sheet. The thickness of the hard coat anti-glare layer was 6 $\mu$m.

<Wet anti-reflection layer>

A wet anti-reflection layer was formed on the obtained resin sheet with the following high refractive index paint and low refractive index paint.

<High refractive index paint>

The high refractive index paint for forming the high refractive index layer was obtained by adding 12 parts by mass of a urethane acrylate oligomer (UN-3320HC, manufactured by Negami Chemical Industrial), 11 parts by mass of an acrylate monomer (4EG-A, manufactured by Kyoeisha Chemical), 5 parts by mass of a photopolymerization initiator (Irgacure-184), and 900 parts by mass of organic solvent MEK (methyl ethyl ketone) to 110 parts by mass of Zircoster ZP-153 (zirconium oxide, manufactured by Nippon Shokubai Co., Ltd.) as zirconia.

<Low refractive index paint>

The low refractive index paint for forming the low refractive index layer was obtained by adding 10 parts by mass of an aliphatic urethane acrylate oligomer, 10 parts by mass of an acrylate monomer (4EG-A, Kyoeisha Chemical), 2 parts by mass of a photopolymerization initiator (Irgacure-184), and 378 parts by mass of organic solvent MEK (methyl ethyl ketone) to 100 parts by mass of Thrulya 4320 (manufactured by JGC C&C) as hollow silica.

The high refractive index paint was coated on the hard coat anti-glare layer side of the resin sheet with a bar coater and dried at 100 °C for 2 minutes. After that, the paint was irradiated with UV (300 $mJ/cm^2$) and cured to obtain a high refractive index layer. The coating thickness of the high refractive index layer was 180 nm, and the refractive index was 1.7.

Next, the low refractive index paint was coated on the high refractive index layer with a bar coater and dried at 100 °C for 2 minutes. After that, the paint was irradiated with UV (300 $mJ/cm^2$) and cured to obtain a low refractive index layer. The coating thickness of the low refractive index layer was 150 nm, and the refractive index was 1.38.

A resin sheet for molding was produced as described above. The visual reflectance of the resin sheet for molding was 1.0%.

Example 2: R100 (Tg 124 °C) / low Tg PC (Tg 125 °C) / 2 mmt

The discharge rate during extrusion of the polycarbonate resin with a single screw extruder was set to 83.0 kg/h, and the thickness of the laminate of the high-hardness resin layer and the polycarbonate resin layer (substrate layer) was 2 mm (the thickness of the high-hardness resin layer near the center was 60 μm). The stretch ratio was 1.17 times. A hard coat anti-glare layer was formed in the same manner as in Example 1 to form a resin sheet. The method for forming the wet anti-reflection layer on the resin sheet was carried out in the same manner as in Example 1 to produce a resin sheet for molding.

Example 3: R100 (Tg 124 °C) / low Tg PC (Tg 125 °C) / 0.5 mmt

The discharge rate during extrusion of the high-hardness resin (B2) and the polycarbonate resin with a single screw extruder was set to 4.8 kg/h and 35.0 kg/h, respectively, and the thickness of the laminate of the high-hardness resin layer and the polycarbonate resin layer (substrate layer) was 0.5 mm (the thickness of the high-hardness resin layer near the center was 60 μm). The stretch ratio was 1.5 times. A hard coat anti-glare layer was formed in the same manner as in Example 1 to form a resin sheet. The method for forming the wet anti-reflection layer on the resin sheet was carried out in the same manner as in Example 1 to produce a resin sheet for molding.

Example 4: R100 (Tg 124 °C) / low Tg PC (Tg 125 °C) / 3.5 mmt

The discharge rate during extrusion of the high-hardness resin (B2) and the polycarbonate resin with a single screw extruder was set to 1.3 kg/h and 72.0 kg/h, respectively, and the thickness of the laminate of the high-hardness resin layer and the polycarbonate resin layer (substrate layer) was 3.5 mm (the thickness of the high-hardness resin layer near the center was 60 μm). The stretch ratio was 1.1 times. A hard coat anti-glare layer was formed in the same manner as in Example 1 to form a resin sheet. The method for forming the wet anti-reflection layer on the resin sheet was carried out in the same manner as in Example 1 to produce a resin sheet for molding.

Example 5: R310 (Tg 141 °C) / low Tg PC (Tg 125 °C) / 2 mmt

Using the same multi-layer extrusion apparatus as in Example 1, a laminate composed of a substrate layer and a high-hardness resin layer was molded. Specifically, the high-hardness resin (B2) (a copolymer of 6% by mass of a methyl methacrylate structural unit, 71% by mass of a styrene structural unit, and 23% by mass of a maleic anhydride structural unit; Resisfy R310 (manufactured by Denka)) was continuously introduced into the single-screw extruder having a screw diameter of 35 mm, and extruded under conditions of a cylinder temperature of 240 °C and a discharge rate of 2.6 kg/h. Further, a polycarbonate resin (Iupizeta T-1380; manufactured by Mitsubishi Gas Chemical) was continuously introduced into the single-screw extruder having a screw diameter of 65 mm, and extruded under conditions of a cylinder temperature of 240 °C and a discharge rate of 83.0 kg/h.

Then, extrusion with a T-die was carried out in the same manner as in Example 1 to obtain a laminate of a high-hardness resin layer and a polycarbonate resin layer (substrate layer). The thickness of the obtained laminate was 2 mm, and the thickness of the high-hardness resin layer near the center was 60 μm. The stretch ratio was 1.17 times.

A hard coat anti-glare layer was formed in the same manner as in Example 1. The method for forming the wet anti-reflection layer on the resin sheet was carried out in the same manner as in Example 1 to produce a resin sheet for

molding.

Example 6: R310 (Tg 141 °C) / S-1000 (Tg 147 °C) / 2 mmt

Using the same multi-layer extrusion apparatus as in Example 1, a laminate composed of a substrate layer and a high-hardness resin layer was molded. Specifically, the high-hardness resin (B2) (a copolymer of 6% by mass of a methyl methacrylate structural unit, 71% by mass of a styrene structural unit, and 23% by mass of a maleic anhydride structural unit; Resisfy R310 (manufactured by Denka)) was continuously introduced into the single-screw extruder having a screw diameter of 35 mm, and extruded under conditions of a cylinder temperature of 240 °C and a discharge rate of 2.6 kg/h. Further, a polycarbonate resin (Iupilon S-1000; manufactured by Mitsubishi Engineering-Plastics) was continuously introduced into the single-screw extruder having a screw diameter of 65 mm, and extruded under conditions of a cylinder temperature of 280 °C and a discharge rate of 83.0 kg/h.

The extruded high-hardness resin and the polycarbonate resin were introduced into a feed block equipped with two types of two-layer distribution pins, and the high-hardness resin and the polycarbonate resin were laminated at a temperature of 280 °C. Further, the laminated product was introduced into a T-die having a temperature of 280 °C, extruded into a sheet, and cooled and stretched while transferring a mirror surface with three mirror-finishing rolls having temperatures of 120 °C, 130 °C, and 190 °C from the upstream side to obtain a laminate of a high-hardness resin layer and a polycarbonate resin layer (substrate layer). The thickness of the obtained laminate was 2 mm, and the thickness of the high-hardness resin layer near the center was 60 μm. The stretch ratio was 1.17 times.

A hard coat anti-glare layer was formed in the same manner as in Example 1. The method for forming the wet anti-reflection layer on the resin sheet was carried out in the same manner as in Example 1 to produce a resin sheet for molding.

Example 7: PM120N (Tg 120 °C) / low Tg PC (Tg 125 °C) / 1.5 mmt

Using the same multi-layer extrusion apparatus as in Example 1, a laminate composed of a substrate layer and a high-hardness resin layer was molded. Specifically, the high-hardness resin (B4) (a copolymer of 7% by mass of a styrene structural unit, 86% by mass of a methyl methacrylate structural unit, and 7% by mass of a N-phenylmaleimide structural unit; Delpet PM120N (manufactured by Asahi Kasei Chemicals Co., Ltd.)) was continuously introduced into the single-screw extruder having a screw diameter of 35 mm, and extruded under conditions of a cylinder temperature of 230 °C and a discharge rate of 2.6 kg/h. Further, a polycarbonate resin (Iupizeta T-13 80; manufactured by Mitsubishi Gas Chemical) was continuously introduced into the single-screw extruder having a screw diameter of 65 mm, and extruded under conditions of a cylinder temperature of 240 °C and a discharge rate of 62.0 kg/h.

Then, extrusion with a T-die was carried out in the same manner as in Example 1 to obtain a laminate of a high-hardness resin layer and a polycarbonate resin layer (substrate layer). The thickness of the obtained laminate was 1.5 mm, and the thickness of the high-hardness resin layer near the center was 60 μm. The stretch ratio was 1.23 times.

A hard coat anti-glare layer was formed in the same manner as in Example 1. The method for forming the wet anti-reflection layer on the resin sheet was carried out in the same manner as in Example 1 to produce a resin sheet for molding.

Example 8: R200 (Tg 126 °C) / low Tg PC (Tg 125 °C) / 2 mmt

Using the same multi-layer extrusion apparatus as in Example 1, a laminate composed of a substrate layer and a high-hardness resin layer was molded. Specifically, the high-hardness resin (B2) (a copolymer of 26% by mass of a methyl methacrylate structural unit, 55% by mass of a styrene structural unit, and 19% by mass of a maleic anhydride structural unit; Resisfy R200 (manufactured by Denka)) was continuously introduced into the single-screw extruder having a screw diameter of 35 mm, and extruded under conditions of a cylinder temperature of 230 °C and a discharge rate of 2.6 kg/h. Further, a polycarbonate resin (Iupizeta T-1380; manufactured by Mitsubishi Gas Chemical) was continuously introduced into the single-screw extruder having a screw diameter of 65 mm, and extruded under conditions of a cylinder temperature of 240 °C and a discharge rate of 83.0 kg/h.

Then, extrusion with a T-die was carried out in the same manner as in Example 1 to obtain a laminate of a high-hardness resin layer and a polycarbonate resin layer (substrate layer). The thickness of the obtained laminate was 2 mm, and the thickness of the high-hardness resin layer near the center was 60 μm. The stretch ratio was 1.17 times.

The material of the hard coat anti-glare layer was the same as in Example 1. The material was applied on the laminate with a bar coater, and the mirror surface of 2 mm-thick mirror glass having a haze of less than 1% was arranged on the laminate. A metal halide lamp (20 mW/cm$^2$) was irradiated for 5 seconds from above the glass to cure the hard coat, and after the hard coat layer was attached, the mirrored glass plate was peeled off to produce a resin sheet. The thickness of the hard coat layer was 6 μm. The method for forming the wet anti-reflection layer on the resin sheet was

carried out in the same manner as in Example 1 to produce a resin sheet for molding, except that the anti-reflection layer was formed on the surface of the hard coat layer.

Example 9: C-PC (KH3410UR) (Tg 118 °C) / low Tg PC (Tg 125 °C) / 2 mmt

Using the same multi-layer extrusion apparatus as in Example 1, a laminate composed of a substrate layer and a high-hardness resin layer was molded. Specifically, the high-hardness resin (B3) (polycarbonate resin; Iupilon KH3410UR (manufactured by Mitsubishi Engineering-Plastics)) was continuously introduced, and extruded under conditions of a cylinder temperature of 270 °C and a discharge rate of 2.6 kg/h. Further, a polycarbonate resin (Iupizeta T-1380; manufactured by Mitsubishi Gas Chemical) was continuously introduced into the single-screw extruder having a screw diameter of 65 mm, and extruded under conditions of a cylinder temperature of 240 °C and a discharge rate of 83.0 kg/h.
Then, extrusion with a T-die was carried out in the same manner as in Example 1 to obtain a laminate of a high-hardness resin layer and a polycarbonate resin layer (substrate layer). The thickness of the obtained laminate was 2 mm, and the thickness of the high-hardness resin layer near the center was 60 μm. The stretch ratio was 1.17 times.
A hard coat layer was formed in the same manner as in Example 8. The method for forming the wet anti-reflection layer on the resin sheet was carried out in the same manner as in Example 1 to produce a resin sheet for molding, except that the anti-reflection layer was formed on the hard coat layer surface.

Example 10: Alloy of R100 and PM120N (Tg 123 °C) / low Tg PC (Tg 125 °C) / 1.2 mmt

75% by mass of a copolymer of 21% by mass of a methyl methacrylate structural unit, 64% by mass of a styrene structural unit, and 15% by mass of a maleic anhydride structural unit (Resisfy R100 (manufactured by Denka)) and 25% by mass of a copolymer of 7% by mass of a styrene structural unit, 86% by mass of a methyl methacrylate structural unit, and 7% by mass of a N-phenylmaleimide structural unit (Delpet PM120N (manufactured by Asahi Kasei Chemicals Co., Ltd.) were introduced into an extruder (TEM-26SS, L/D of about 40; manufactured by Toshiba Machine Co., Ltd.) having a screw diameter of 26 mm, and melt-kneaded at 240 °C to obtain a high-hardness resin including the resin (B2) and the resin (B4).
Using the same multi-layer extrusion apparatus as in Example 1, a laminate composed of a substrate layer and a high-hardness resin layer was molded. Specifically, the above high-hardness resin was continuously introduced into the single-screw extruder having a screw diameter of 35 mm, and extruded under conditions of a cylinder temperature of 230 °C and a discharge rate of 2.6 kg/h. Further, a polycarbonate resin (Iupizeta T-1380; manufactured by Mitsubishi Gas Chemical) was continuously introduced into the single-screw extruder having a screw diameter of 65 mm, and extruded under conditions of a cylinder temperature of 240 °C and a discharge rate of 50.0 kg/h.
Then, extrusion with a T-die was carried out in the same manner as in Example 1 to obtain a laminate of a high-hardness resin layer and a polycarbonate resin layer (substrate layer). The thickness of the obtained laminate was 1.2 mm, and the thickness of the high-hardness resin layer near the center was 60 μm. The stretch ratio was 1.3 times.
A hard coat layer was formed in the same manner as in Example 8. The method for forming the wet anti-reflection layer on the resin sheet was carried out in the same manner as in Example 1 to produce a resin sheet for molding, except that the anti-reflection layer was formed on the hard coat layer surface.

Example 11: R310 (Tg 141 °C) / low Tg PC (Tg 125 °C) / 0.5 mmt

Using the same multi-layer extrusion apparatus as in Example 1, a laminate composed of a substrate layer and a high-hardness resin layer was molded. Specifically, the high-hardness resin (B2) (a copolymer of 6% by mass of a methyl methacrylate structural unit, 71% by mass of a styrene structural unit, and 23% by mass of a maleic anhydride structural unit; Resisfy R310 (manufactured by Denka)) was continuously introduced into the single-screw extruder having a screw diameter of 35 mm, and extruded under conditions of a cylinder temperature of 230 °C and a discharge rate of 8 kg/h. Further, a polycarbonate resin (Iupizeta T-1380; manufactured by Mitsubishi Gas Chemical) was continuously introduced into the single-screw extruder having a screw diameter of 65 mm, and extruded under conditions of a cylinder temperature of 240 °C and a discharge rate of 35.0 kg/h.
Then, extrusion with a T-die was carried out in the same manner as in Example 1 to obtain a laminate of a high-hardness resin layer and a polycarbonate resin layer (substrate layer). The thickness of the obtained laminate was 0.5 mm, and the thickness of the high-hardness resin layer near the center was 100 μm. The stretch ratio was 1.5 times.
The material of the hard coat anti-glare layer was the same as in Example 1. The material was applied on the laminate with a bar coater, and the uneven surface of 2 mm-thick frosted glass having a haze of 4% was arranged on the laminate. A metal halide lamp (20 mW/cm$^2$) was irradiated for 5 seconds to cure the hard coat, and after the hard coat anti-glare layer was attached, the frosted glass plate was peeled off to produce a resin sheet. The thickness of the

hard coat anti-glare layer was 6 μm.

The method for forming the wet anti-reflection layer on the resin sheet was carried out in the same manner as in Example 1 to produce a resin sheet for molding.

Example 12: FPC0220 (Tg 184 °C) / E2000 (Tg 147 °C) / 1.2 mmt

Using the same multi-layer extrusion apparatus as in Example 1, a laminate composed of a substrate layer and a high-hardness resin layer was molded. Specifically, the high-hardness resin (B5) (a polycarbonate resin including a structural unit represented by formula (7); Iupizeta FPC0220 (manufactured by Mitsubishi Gas Chemical)) was continuously introduced into the single-screw extruder having a screw diameter of 35 mm, and extruded under conditions of a cylinder temperature of 300 °C and a discharge rate of 2.6 kg/h. Further, a polycarbonate resin (Iupilon E2000; manufactured by Mitsubishi Gas Chemical) was continuously introduced into the single-screw extruder having a screw diameter of 65 mm, and extruded under conditions of a cylinder temperature of 280 °C and a discharge rate of 50.0 kg/h.

The extruded high-hardness resin and the polycarbonate resin were introduced into a feed block equipped with two types of two-layer distribution pins, and the high-hardness resin and the polycarbonate resin were laminated at a temperature of 280 °C. Further, the laminated product was extruded into a sheet with a T-die having a temperature of 280 °C, and cooled and stretched while transferring a mirror surface with three mirror-finishing rolls having temperatures of 120 °C, 130 °C, and 190 °C from the upstream side to obtain a laminate of a high-hardness resin layer and a polycarbonate resin layer (substrate layer). The thickness of the obtained laminate was 1.2 mm, and the thickness of the high-hardness resin layer near the center was 60 μm. The stretch ratio was 1.3 times.

A hard coat anti-glare layer was formed in the same manner as in Example 11. The method for forming the wet anti-reflection layer on the resin sheet was carried out in the same manner as in Example 1 to produce a resin sheet for molding.

Example 13: MS-H (Tg 115 °C) / low Tg PC (Tg 125 °C) / 1.2 mmt

Using the same multi-layer extrusion apparatus as in Example 1, a laminate composed of a substrate layer and a high-hardness resin layer was molded. The high-hardness resin (B1) (a resin in which both $R^1$ and $R^2$ in general formula (1) are methyl groups, $R^3$ in general formula (2) is a hydrogen atom, and $R^4$ is a cyclohexyl group; composed of 75 mol% of a (meth)acrylate structural unit and 25 mol% of an aliphatic vinyl structural unit and has a weight average molecular weight of 120,000) was continuously introduced into the single-screw extruder having a screw diameter of 35 mm, and extruded under conditions of a cylinder temperature of 240 °C and a discharge rate of 2.6 kg/h. Further, a polycarbonate resin (Iupizeta T-1380; manufactured by Mitsubishi Gas Chemical) was continuously introduced into the single-screw extruder having a screw diameter of 65 mm, and extruded under conditions of a cylinder temperature of 240 °C and a discharge rate of 50.0 kg/h.

Then, extrusion with a T-die was carried out in the same manner as in Example 1 to obtain a laminate of a high-hardness resin layer and a polycarbonate resin layer (substrate layer). The thickness of the obtained laminate was 1.2 mm, and the thickness of the high-hardness resin layer near the center was 60 μm. The stretch ratio was 1.3 times.

A hard coat anti-glare layer was formed in the same manner as in Example 11. The method for forming the wet anti-reflection layer on the resin sheet was carried out in the same manner as in Example 1 to produce a resin sheet for molding.

Example 14: Alloy of V020 and St-MAH resin (Tg 132 °C) / low Tg PC (Tg 125 °C) / 1.2 mmt

75% by mass of a copolymer of 78% by mass of a styrene structural unit and 22% by mass of a maleic anhydride structural unit (XIBOND 160 (manufactured by Polyscope) and 25% by mass of an acrylic resin (Altuglas (manufactured by Arkema Asahi Kasei Chemicals Co., Ltd.)) were extruded with an extruder (TEM-26SS, L/D of about 40; manufactured by Toshiba Machine Co., Ltd.) having a screw diameter of 26 mm, and melt-kneaded at 240 °C to obtain a high-hardness resin including the resin (B6).

Using the same multi-layer extrusion apparatus as in Example 1, a laminate composed of a substrate layer and a high-hardness resin layer was molded. Specifically, the above high-hardness resin was continuously introduced into the single-screw extruder having a screw diameter of 35 mm, and extruded under conditions of a cylinder temperature of 230 °C and a discharge rate of 2.6 kg/h. Further, a polycarbonate resin (Iupizeta T-1380; manufactured by Mitsubishi Gas Chemical) was continuously introduced into the single-screw extruder having a screw diameter of 65 mm, and extruded under conditions of a cylinder temperature of 240 °C and a discharge rate of 50.0 kg/h.

Then, extrusion with a T-die was carried out in the same manner as in Example 1 to obtain a laminate of a high-hardness resin layer and a polycarbonate resin layer (substrate layer). The thickness of the obtained laminate was 1.2 mm, and the thickness of the high-hardness resin layer near the center was 60 μm. The stretch ratio was 1.3 times.

A hard coat layer was formed in the same manner as in Example 8. The method for forming the wet anti-reflection layer on the resin sheet was carried out in the same manner as in Example 1 to produce a resin sheet for molding, except that the anti-reflection layer was formed on the hard coat layer surface.

Example 15: Alloy of V020 and St-MAH resin (Tg 132 °C) / low Tg PC (Tg 125 °C) / 1.2 mmt

75% by mass of a copolymer of 78% by mass of a styrene structural unit and 22% by mass of a maleic anhydride structural unit (XIBOND 160 (manufactured by Polyscope) and 25% by mass of an acrylic resin (Altuglas (manufactured by Arkema Asahi Kasei Chemicals Co., Ltd.)) were extruded with an extruder (TEM-26SS, L/D of about 40; manufactured by Toshiba Machine Co., Ltd.) having a screw diameter of 26 mm, and melt-kneaded at 240 °C to obtain a high-hardness resin including the resin (B6).

Using the same multi-layer extrusion apparatus as in Example 1, a laminate composed of a substrate layer and a high-hardness resin layer was molded. Specifically, the above high-hardness resin was continuously introduced into the single-screw extruder having a screw diameter of 35 mm, and extruded under conditions of a cylinder temperature of 230 °C and a discharge rate of 2.6 kg/h. Further, a polycarbonate resin (Iupizeta T-1380; manufactured by Mitsubishi Gas Chemical) was continuously introduced into the single-screw extruder having a screw diameter of 65 mm, and extruded under conditions of a cylinder temperature of 240 °C and a discharge rate of 50.0 kg/h.

Then, extrusion with a T-die was carried out in the same manner as in Example 1 to obtain a laminate of a high-hardness resin layer and a polycarbonate resin layer (substrate layer). The thickness of the obtained laminate was 1.2 mm, and the thickness of the high-hardness resin layer near the center was 60 μm. The stretch ratio was 1.3 times.

A hard coat layer was formed in the same manner as in Example 8. The method for forming the wet anti-reflection layer on the resin sheet was carried out in the same manner as in Example 1 to produce a resin sheet for molding, except that the anti-reflection layer was formed on the hard coat layer surface.

Comparative Example 1: MS-H (Tg 115 °C) / low Tg PC (125 °C) / 0.5 mmt

The conditions when extruding the high-hardness resin (B1) with a single-screw extruder were a cylinder temperature of 230 °C and a discharge rate of 8.0 kg/h. The discharge rate during extrusion of the polycarbonate resin with a single-screw extruder was set to 35.0 kg/h, and the thickness of the laminate of the high-hardness resin layer and the polycarbonate resin layer (substrate layer) was 0.5 mm (the thickness of the high-hardness resin layer near the center was 60 μm). The stretch ratio was 1.5 times.

A hard coat anti-glare layer was formed in the same manner as in Example 1.

In order from the hard coat anti-glare layer side of the resin sheet as the first layer, each layer was formed by vacuum deposition in which the high refractive index layer was $TiO_2$ (refractive index 2.49) and the low refractive index layer was $SiO_2$ (refractive index 1.46) to form an inorganic anti-reflection layer (not a wet anti-reflection layer obtained by a wet film forming method) to obtain a resin sheet for molding.

The types and thicknesses of each layer were as follows.

| | |
|---|---|
| First layer: | $TiO_2$ 10 nm |
| Second layer: | $SiO_2$ 50 nm |
| Third layer: | $TiO_2$ 20 nm |
| Fourth layer: | $SiO_2$ 40 nm |
| Fifth layer: | $TiO_2$ 20 nm |
| Sixth layer: | $SiO_2$ 110 nm |

The visual reflectance of the obtained resin sheet for molding was 0.6%.

Comparative Example 2: Alloy of R100 and PMMA (Tg 115 °C) / low Tg PC (Tg 125 °C) / 1.2 mmt

75% by mass of a copolymer composed of 21% by mass of a methyl methacrylate structural unit, 64% by mass of a styrene structural unit, and 15% by mass of a maleic anhydride structural unit (Resisfy R100; manufactured by Denka) and 25% by mass of an acrylic resin (Parapet HR-1000L (PMMA); manufactured by Kuraray Co., Ltd.) were extruded with an extruder (TEM-26SS, LID of about 40; manufactured by Toshiba Machine Co., Ltd.) having a screw diameter of 26 mm, and melt-kneaded at 240 °C to obtain a high-hardness resin including the resin (B2).

Using the same multi-layer extrusion apparatus as in Example 1, a laminate composed of a substrate layer and a high-hardness resin layer was molded. Specifically, the above high-hardness resin was continuously introduced into the single-screw extruder having a screw diameter of 35 mm, and extruded under conditions of a cylinder temperature

of 230 °C and a discharge rate of 2.6 kg/h. Further, a polycarbonate resin (Iupizeta T-1380; manufactured by Mitsubishi Gas Chemical) was continuously introduced into the single-screw extruder having a screw diameter of 65 mm, and extruded under conditions of a cylinder temperature of 240 °C and a discharge rate of 50.0 kg/h.

Then, extrusion with a T-die was carried out in the same manner as in Example 1 to obtain a laminate of a high-hardness resin layer and a polycarbonate resin layer (substrate layer). The thickness of the obtained laminate was 1.2 mm, and the thickness of the high-hardness resin layer near the center was 60 μm. The stretch ratio was 1.3 times.

A hard coat anti-glare layer was formed in the same manner as in Example 1. An inorganic anti-reflection layer was formed on the resin sheet in the same manner as in Comparative Example 1 to produce a resin sheet for molding.

Comparative Example 3: R100 (Tg 124 °C) / low Tg PC (Tg 125 °C) / 1.2 mmt

Using a multi-screw extruder having a single-screw extruder with a screw diameter of 35 mm, a single-screw extruder with a screw diameter of 65 mm, a feed block connected to each extruder, and a T-die connected to the feed block, a laminate composed of a substrate layer and a high-hardness resin layer was molded. Specifically, the high-hardness resin (B2) (a copolymer of 21% by mass of a methyl methacrylate structural unit, 64% by mass of a styrene structural unit, and 15% by mass of a maleic anhydride structural unit; Resisfy R100 (manufactured by Denka)) was continuously introduced into the single-screw extruder having a screw diameter of 35 mm, and extruded under conditions of a cylinder temperature of 230 °C and a discharge rate of 2.6 kg/h. Further, a polycarbonate resin (Iupizeta T-1380; manufactured by Mitsubishi Gas Chemical) was continuously introduced into the single-screw extruder having a screw diameter of 65 mm, and extruded under conditions of a cylinder temperature of 240 °C and a discharge rate of 50.0 kg/h.

The extruded high-hardness resin and the polycarbonate resin were introduced into a feed block equipped with two types of two-layer distribution pins, and the high-hardness resin and the polycarbonate resin were laminated at a temperature of 240 °C. Further, the laminated product was introduced into a T-die having a temperature of 240 °C, extruded into a sheet, and cooled and stretched while transferring a mirror surface with three mirror-finishing rolls having temperatures of 120 °C, 130 °C, and 190 °C from the upstream side to obtain a laminate of a high-hardness resin layer and a polycarbonate resin layer (substrate layer). The stretch ratio was 1.3 times. The thickness of the obtained laminate was 1.2 mm, and the thickness of the high-hardness resin layer near the center was 60 μm.

A hard coat anti-glare layer was formed in the same manner as in Example 1. An inorganic anti-reflection layer was formed on the resin sheet in the same manner as in Comparative Example 1 to produce a resin sheet for molding.

Comparative Example 4

A laminate of a high-hardness resin layer and a polycarbonate resin layer (substrate layer) was obtained in the same manner as in Example 1.

A hard coat anti-glare layer was formed in the same manner as in Example 1. An inorganic anti-reflection layer was formed on the resin sheet in the same manner as in Comparative Example 1 to produce a resin sheet for molding.

Comparative Example 5: MS-H (Tg 115 °C) / S1000 (Tg 147 °C) / 1.2 mmt

Using the same multi-layer extrusion apparatus as in Example 1, a laminate composed of a substrate layer and a high-hardness resin layer was molded. Specifically, the high-hardness resin (B1) (a resin in which both $R^1$ and $R^2$ in general formula (1) are methyl groups, $R^3$ in general formula (2) is a hydrogen atom, and $R^4$ is a cyclohexyl group; composed of 75 mol% of a (meth)acrylate structural unit and 25 mol% of an aliphatic vinyl structural unit and has a weight average molecular weight of 120,000) was continuously introduced into the single-screw extruder having a screw diameter of 35 mm, and extruded under conditions of a cylinder temperature of 240 °C and a discharge rate of 2.6 kg/h. Further, a polycarbonate resin (Iupilon S-1000; manufactured by Mitsubishi Engineering-Plastics) was continuously introduced into the single-screw extruder having a screw diameter of 65 mm, and extruded under conditions of a cylinder temperature of 280 °C and a discharge rate of 50.0 kg/h.

The extruded high-hardness resin and the polycarbonate resin were introduced into a feed block equipped with two types of two-layer distribution pins, and the high-hardness resin and the polycarbonate resin were laminated at a temperature of 270 °C. Further, the laminated product was extruded into a sheet with a T-die having a temperature of 270 °C, and cooled while transferring a mirror surface with three mirror-finishing rolls having temperatures of 120 °C, 130 °C, and 190 °C from the upstream side to obtain a laminate of a high-hardness resin layer and a polycarbonate resin layer (substrate layer). The stretch ratio was 1.3 times. The thickness of the obtained laminate was 1.2 mm, and the thickness of the high-hardness resin layer near the center was 60 μm.

A hard coat anti-glare layer was formed in the same manner as in Example 1. The method for forming the wet anti-reflection layer on the resin sheet was carried out in the same manner as in Example 1 to produce a resin sheet for molding.

Comparative Example 6: MS-H (Tg 115 °C) / S1000 (Tg 147 °C) / 2 mmt

In Comparative Example 5, the discharge rate during extrusion of the polycarbonate resin with a single-screw extruder was set to 83.0 kg/h, and the thickness of the laminate of the high-hardness resin layer and the polycarbonate resin layer (substrate layer) was set to 2 mm (the thickness of the high-hardness resin layer near the center was 60 μm). The stretch ratio was 1.17 times.

A hard coat anti-glare layer was formed in the same manner as in Example 1. The method for forming the wet anti-reflection layer on the resin sheet was carried out in the same manner as in Example 1 to produce a resin sheet for molding.

Comparative Example 7: MS-H (Tg 115 °C) / S1000 (Tg 147 °C) / 3.5 mmt

In Comparative Example 5, the discharge rate during extrusion of the high-hardness resin (B1) and the polycarbonate resin with a single screw extruder was set to 1.3 kg/h and 72.0 kg/h, respectively, and the thickness of the laminate of the high-hardness resin layer and the polycarbonate resin layer (substrate layer) was 3.5 mm (the thickness of the high-hardness resin layer near the center was 60 μm). The stretch ratio was 1.1 times.

A hard coat anti-glare layer was formed in the same manner as in Example 1. The method for forming the wet anti-reflection layer on the resin sheet was carried out in the same manner as in Example 1 to produce a resin sheet for molding.

Comparative Example 8: MS-H (Tg 115 °C) / S1000 (Tg 147 °C) / 0.5 mmt

In Comparative Example 5, the discharge rate during extrusion of the high-hardness resin (B1) and the polycarbonate resin with a single screw extruder was set to 4.8 kg/h and 35.0 kg/h, respectively, and the thickness of the laminate of the high-hardness resin layer and the polycarbonate resin layer (substrate layer) was 0.5 mm (the thickness of the high-hardness resin layer near the center was 60 μm). The stretch ratio was 1.5 times.

A hard coat anti-glare layer was formed in the same manner as in Example 1. The method for forming the wet anti-reflection layer on the resin sheet was carried out in the same manner as in Example 1 to produce a resin sheet for molding.

Comparative Example 9: PMMA (Tg 105 °C) / low Tg PC (Tg 125 °C) / 0.8 mmt

Using a multi-screw extruder having a single-screw extruder with a screw diameter of 32 mm, a single-screw extruder with a screw diameter of 65 mm, a feed block connected to each extruder, and a T-die connected to the feed block, a laminate composed of a substrate layer and a high-hardness resin layer was molded. Specifically, a high-hardness resin (an acrylic resin (Parapet HR-1000L (PMMA); manufactured by Kuraray Co., Ltd.) was continuously introduced into the single-screw extruder having a screw diameter of 32 mm, and extruded under conditions of a cylinder temperature of 250 °C and a discharge rate of 2.6 kg/h. Further, a polycarbonate resin (Iupizeta T-1380; manufactured by Mitsubishi Gas Chemical) was continuously introduced into the single-screw extruder having a screw diameter of 65 mm, and extruded under conditions of a cylinder temperature of 240 °C and a discharge rate of 32.0 kg/h.

The extruded high-hardness resin and the polycarbonate resin were introduced into a feed block equipped with two types of two-layer distribution pins, and the high-hardness resin and the polycarbonate resin were laminated at a temperature of 240 °C. Further, the laminated product was introduced into a T-die having a temperature of 240 °C, extruded into a sheet, and cooled while transferring a mirror surface with three mirror-finishing rolls having temperatures of 110 °C, 140 °C, and 185 °C from the upstream side to obtain a laminate of a high-hardness resin layer and a polycarbonate resin layer (substrate layer). The thickness of the obtained laminate was 0.8 mm, and the thickness of the high-hardness resin layer near the center was 60 μm. The stretch ratio was 1.43 times.

A hard coat anti-glare layer was formed in the same manner as in Example 1. The method for forming the wet anti-reflection layer on the resin sheet was carried out in the same manner as in Example 1 to produce a resin sheet for molding.

Comparative Example 10: FPC0220 (Tg 184 °C) / T1380 (Tg 125 °C) / 1.2 mmt

Using the same multi-layer extrusion apparatus as in Example 1, a laminate composed of a substrate layer and a high-hardness resin layer was molded. Specifically, the high-hardness resin (B5) (a polycarbonate resin including a structural unit represented by formula (7); Iupizeta FPC0220 (manufactured by Mitsubishi Gas Chemical)) was continuously introduced into the single-screw extruder having a screw diameter of 35 mm, and extruded under conditions of a cylinder temperature of 300 °C and a discharge rate of 2.6 kg/h. Further, a polycarbonate resin (Iupizeta T1380;

manufactured by Mitsubishi Gas Chemical) was continuously introduced into the single-screw extruder having a screw diameter of 65 mm, and extruded under conditions of a cylinder temperature of 240 °C and a discharge rate of 50.0 kg/h.

The extruded high-hardness resin and the polycarbonate resin were introduced into a feed block equipped with two types of two-layer distribution pins, and the high-hardness resin and the polycarbonate resin were laminated at a temperature of 280 °C. Further, the laminated product was extruded into a sheet with a T-die having a temperature of 280 °C, and cooled and stretched while transferring a mirror surface with three mirror-finishing rolls having temperatures of 120 °C, 130 °C, and 190 °C from the upstream side to obtain a laminate of a high-hardness resin layer and a polycarbonate resin layer (substrate layer). The stretch ratio was 1.3 times. The thickness of the obtained laminate was 1.2 mm, and the thickness of the high-hardness resin layer near the center was 60 μm.

A hard coat anti-glare layer was formed in the same manner as in Example 1. The method for forming the wet anti-reflection layer on the resin sheet was carried out in the same manner as in Example 1 to produce a resin sheet for molding.

Comparative Example 11: S-1000 (Tg 147 °C) alone / 2 mmt

A laminate was molded using the same polycarbonate resin included in the substrate layer instead of a high-hardness resin. The same multi-layer extrusion apparatus as in Example 1 was used for the extrusion apparatus. Specifically, a polycarbonate resin (Iupilon S-1000; manufactured by Mitsubishi Engineering-Plastics; pencil hardness 3B) was continuously introduced into the single-screw extruder having a screw diameter of 35 mm, and extruded under conditions of a cylinder temperature of 280 °C and a discharge rate of 2.6 kg/h. Further, a polycarbonate resin (Iupilon S-1000; manufactured by Mitsubishi Engineering-Plastics) was continuously introduced into the single-screw extruder having a screw diameter of 65 mm, and extruded under conditions of a cylinder temperature of 280 °C and a discharge rate of 83.0 kg/h.

The extruded the polycarbonate resin was introduced into a feed block equipped with two types of two-layer distribution pins, and laminated at a temperature of 280 °C. Further, the laminated product was introduced into a T-die having a temperature of 280 °C, extruded into a sheet, and cooled and stretched while transferring a mirror surface with three mirror-finishing rolls having temperatures of 120 °C, 130 °C, and 190 °C from the upstream side to obtain a laminate of a polycarbonate resin layer. The stretch ratio was 1.17 times. The thickness of the obtained laminate was 2 mm.

A hard coat anti-glare layer was formed in the same manner as in Example 1. The method for forming the wet anti-reflection layer on the resin sheet was carried out in the same manner as in Example 1 to produce a resin sheet for molding.

The pencil hardness, the presence or absence of cracks after molding, and flow marks were evaluated for the resin sheets produced in the examples and comparative examples. The results are shown in Table 1 below.

[Table 1]

| | TgB*1 (°C) | TgA*2 (°C) | TgDifference (TgB-TgA) | Sheet Thickness*3 (mm) | Pencil Hardness of Resin Sheet | Flow marks | Cracks in HC and Anti-reflection Layer after Molding |
|---|---|---|---|---|---|---|---|
| Example 1 | 124 | 125 | -1 | 1.2 | 2H | no | no |
| Example 2 | 124 | 125 | -1 | 2 | 2H | no | no |
| Example 3 | 124 | 125 | -1 | 0.5 | 2H | no | no |
| Example 4 | 124 | 125 | -1 | 3.5 | 2H | no | no |
| Example 5 | 141 | 125 | 16 | 2 | 3H | no | no |
| Example 6 | 141 | 147 | -6 | 2 | 3H | no | no |
| Example 7 | 120 | 125 | -5 | 1.5 | 3H | no | no |
| Example 8 | 126 | 125 | 1 | 2 | 3H | no | no |
| Example 9 | 118 | 125 | -7 | 2 | 4H | no | no |
| Example 10 | 123 | 125 | -2 | 1.2 | 3H | no | no |
| Example 11 | 141 | 125 | 16 | 0.5 | 3H | no | no |
| Example 12 | 184 | 147 | 37 | 1.2 | 2H | no | no |
| Example 13 | 115 | 125 | -10 | 1.2 | 3H | no | no |

(continued)

| | TgB*1 (°C) | TgA*2 (°C) | TgDifference (TgB-TgA) | Sheet Thickness*3 (mm) | Pencil Hardness of Resin Sheet | Flow marks | Cracks in HC and Anti-reflection Layer after Molding |
|---|---|---|---|---|---|---|---|
| Example 14 | 132 | 125 | 7 | 1.2 | 3H | no | no |
| Example 15 | 132 | 125 | 7 | 1.2 | 3H | no | no |
| Comparative Example 1 | 115 | 125 | -10 | 0.5 | 3H | no | yes |
| Comparative Example 2 | 115 | 125 | -10 | 1.2 | 3H | no | yes |
| Comparative Example 3 | 124 | 125 | -1 | 1.2 | 2H | no | yes |
| Comparative Example 4 | 124 | 125 | -1 | 1.2 | 2H | no | yes |
| Comparative Example 5 | 115 | 147 | -32 | 1.2 | 3H | no | yes |
| Comparative Example 6 | 115 | 147 | -32 | 2 | 3H | no | yes |
| Comparative Example 7 | 115 | 147 | -32 | 3.5 | 3H | no | yes |
| Comparative Example 8 | 115 | 147 | -32 | 0.5 | 3H | no | yes |
| Comparative Example 9 | 105 | 125 | -20 | 0.8 | 3H | no | yes |
| Comparative Example 10 | 184 | 125 | 59 | 1.2 | 2H | yes | no |
| Comparative Example 11 | - | 147 | - | 2 | HB | no | no |

* 1 "TgB" means the Tg of the high-hardness resin.
*2 "TgA" means the Tg of the polycarbonate resin.
*3 "Sheet thickness" means the total thickness of the substrate layer and the high-hardness resin layer.

## Claims

**1.** A resin sheet for molding comprising:

a substrate layer including a polycarbonate resin (a1);
a high-hardness resin layer including a high-hardness resin, wherein the high-hardness resin layer is provided on at least one surface of the substrate layer;
a hard coat layer or a hard coat anti-glare layer that is provided on at least one surface of the high-hardness resin layer; and
a wet anti-reflection layer that is laminated on a surface of the hard coat layer or hard coat anti-glare layer on an opposite side to the high-hardness resin layer side, wherein
the polycarbonate resin (a1) and the high-hardness resin each have a glass transition point that satisfies the following relationship.

$$-10\ ^\circ C \leq (\text{glass transition point of high-hardness resin}) - (\text{glass transition point of polycarbonate resin (a1)}) \leq 40\ ^\circ C$$

2. The resin sheet for molding according to claim 1, wherein the polycarbonate resin (a1) is an aromatic polycarbonate resin.

3. The resin sheet for molding according to claim 2, wherein the aromatic polycarbonate resin includes a structural unit represented by the following formula (3a).

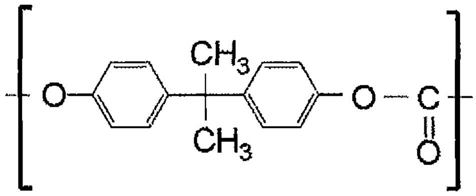

(3a)

4. The resin sheet for molding according to any one of claims 1 to 3, wherein a content of the polycarbonate resin (a1) is 75 to 100% by mass based on a total mass of the substrate layer.

5. The resin sheet for molding according to any one of claims 1 to 4, wherein the high-hardness resin includes at least one selected from the group consisting of:

a resin (B1), which is a copolymer including a (meth)acrylate structural unit (a) represented by the following general formula (1):

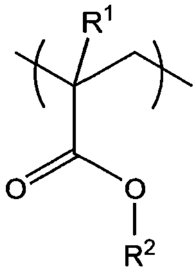

(1)

wherein $R^1$ is a hydrogen atom or a methyl group, $R^2$ is an alkyl group having 1 to 18 carbon atoms; and an aliphatic vinyl structural unit (b) represented by the following general formula (2):

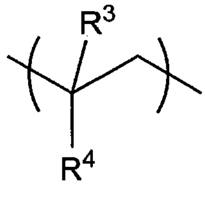

(2)

wherein $R^3$ is a hydrogen atom or a methyl group, and $R^4$ is a cyclohexyl group which may be substituted with a hydrocarbon group having 1 to 4 carbon atoms,
a resin (B2), which is a copolymer including 6 to 77% by mass of a (meth)acrylate structural unit, 15 to 71% by mass of a styrene structural unit, and 8 to 23% by mass of an unsaturated dicarboxylic acid structural unit,
a resin (B3), which is a copolymer including a structural unit (c) represented by the following general formula (5):

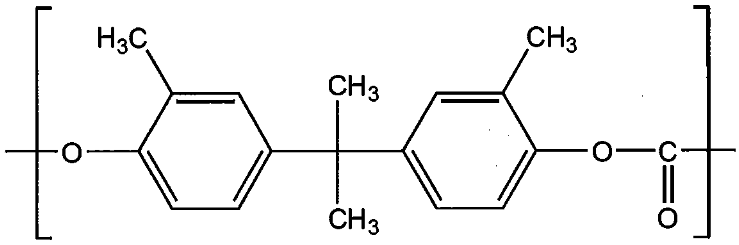

(5)

a resin (B4), which is a copolymer including 5 to 20% by mass of a styrene structural unit, 60 to 90% by mass of a (meth)acrylate structural unit, and 5 to 20% by mass of an N-substituted maleimide structural unit,
a resin (B5), which is a polymer including a structural unit (e) represented by the following general formula (7):

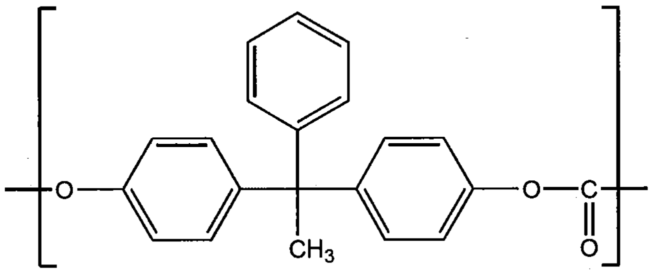

(7)

and a resin (B6), which is a copolymer including 50 to 95% by mass of a styrene structural unit and 5 to 50% by mass of an unsaturated dicarboxylic acid unit.

6. The resin sheet for molding according to claim 5, wherein the resin (B3) is a copolymer further including a structural unit (d) represented by the following formula (6).

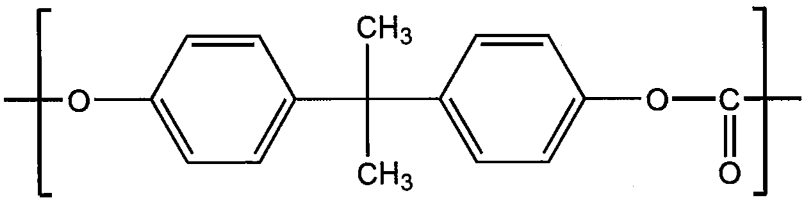

(6)

7. A resin molded article produced by molding the resin sheet for molding according to any one of claims 1 to 6.

**INTERNATIONAL SEARCH REPORT**

International application No.
PCT/JP2021/020285

A. CLASSIFICATION OF SUBJECT MATTER
B32B 27/30(2006.01)i; B32B 27/36(2006.01)i; C08F 212/08(2006.01)i; C08F 220/14(2006.01)i; B29C 48/08(2019.01)i; B29C 48/21(2019.01)i; B32B 7/027(2019.01)i
FI: B32B27/36 102; B32B27/30 A; B32B27/30 B; B32B7/027; B29C48/08; B29C48/21; C08F220/14; C08F212/08
According to International Patent Classification (IPC) or to both national classification and IPC

B. FIELDS SEARCHED
Minimum documentation searched (classification system followed by classification symbols)
B32B1/00-43/00

Documentation searched other than minimum documentation to the extent that such documents are included in the fields searched

| | |
|---|---|
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | WO 2019/049704 A1 (MITSUBISHI GAS CHEMICAL CO., INC.) 14 March 2019 (2019-03-14) claims, paragraph [0131] | 1-7<br>1-4, 7 |
| Y | WO 2019/107462 A1 (KURARAY CO., LTD.) 06 June 2019 (2019-06-06) claims, paragraphs [0042], [0047], [0055] | 1-4, 7 |
| Y | JP 2006-103169 A (MITSUBISHI GAS CHEMICAL CO., INC.) 20 April 2006 (2006-04-20) claims, paragraph [0036] | 1-4, 7 |
| Y | JP 2017-71152 A (MITSUBISHI PLASTICS INC.) 13 April 2017 (2017-04-13) paragraphs [0038], [0058], [0064], [0065], [0074], [0081], [0083] | 1-4, 7 |

☐ Further documents are listed in the continuation of Box C. ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 05 August 2021 (05.08.2021) | 24 August 2021 (24.08.2021) |
| Name and mailing address of the ISA/<br>Japan Patent Office<br>3-4-3, Kasumigaseki, Chiyoda-ku,<br>Tokyo 100-8915, Japan | Authorized officer<br><br>Telephone No. |

Form PCT/ISA/210 (second sheet) (January 2015)

**INTERNATIONAL SEARCH REPORT**
Information on patent family members

International application No.
PCT/JP2021/020285

| Patent Documents referred in the Report | Publication Date | Patent Family | Publication Date |
|---|---|---|---|
| WO 2019/049704 A1 | 14 Mar. 2019 | US 2020/0247098 A1 claims, paragraph [0179]<br>EP 3680103 A1<br>CN 111051063 A<br>KR 10-2020-0050985 A<br>TW 201927900 A | |
| WO 2019/107462 A1 | 06 Jun. 2019 | CN 111433028 A<br>KR 10-2020-0088859 A | |
| JP 2006-103169 A | 20 Apr. 2006 | (Family: none) | |
| JP 2017-71152 A | 13 Apr. 2017 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2001334609 A
- JP 2009234184 A
- JP H0440183 B
- JP 2010284910 A
- JP 2009196153 A